(19) Europäisches Patentamt / European Patent Office / Office européen des brevets

(11) **EP 3 848 575 B1**

(12) **EUROPÄISCHE PATENTSCHRIFT**

(45) Veröffentlichungstag und Bekanntmachung des Hinweises auf die Patenterteilung:
**29.10.2025   Patentblatt 2025/44**

(21) Anmeldenummer: **20150972.6**

(22) Anmeldetag: **09.01.2020**

(51) Internationale Patentklassifikation (IPC):
**F03D 7/02** *(2006.01)*        **F03D 7/04** *(2006.01)*

(52) Gemeinsame Patentklassifikation (CPC):
**F03D 7/048; F03D 7/028;** F03D 7/026;
F03D 7/0264; Y02E 10/72

(54) **VERFAHREN ZUM BETREIBEN EINES WINDPARKS MIT EINER VIELZAHL VON WINDENERGIEANLAGEN SOWIE EIN ENTSPRECHENDER WINDPARK**

METHOD FOR OPERATING A WIND FARM WITH A PLURALITY OF WIND TURBINES AND CORRESPONDING WIND FARM

PROCÉDÉ DE FONCTIONNEMENT D'UN PARC ÉOLIEN COMPRENANT PLUSIEURS ÉOLIENNES AINSI QUE PARC ÉOLIEN CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.07.2021   Patentblatt 2021/28**

(73) Patentinhaber: **Nordex Energy SE & Co. KG**
**22419 Hamburg (DE)**

(72) Erfinder:
• **Großeholz, Georg**
**22767 Hamburg (DE)**
• **Jurkat, Mark**
**22844 Norderstedt (DE)**

(74) Vertreter: **Hauck Patent- und Rechtsanwälte PartmbB**
**Postfach 11 31 53**
**20431 Hamburg (DE)**

(56) Entgegenhaltungen:
EP-A1- 3 570 401        EP-A1- 3 754 178
US-A1- 2018 195 493

**Beschreibung**

Die vorliegende Erfindung betrifft ein Verfahren zum Betreiben eines Windparks mit einer Vielzahl von Windenergieanlagen sowie einen Windpark. Bei der Erfindung wird dem Windpark ein Wirkleistungssollwert für die einzuspeisende Wirkleistung vorgegeben, die Vorgabe kann von extern beispielsweise einem Netzbetreiber oder auf Basis einer am Netzverknüpfungspunkt des Windparks erfassten Netzgröße sowie einer in der Windparkregelung vorgegebenen Regelungsvorschrift erfolgen. Beispielsweise kann der Wirkleistungssollwert basierend auf der Netzfrequenz, der Netzspannung und/oder der vom Windpark abgegeben Blindleistung vorgegeben werden.

Es ist grundsätzlich bekannt, die durch einen Windpark insgesamt abgegebene Wirkleistung durch die Vorgabe eines Sollwerts zu begrenzen. Dies kann beispielsweise nötig sein, wenn die an das Netz angeschlossenen Verbraucher weniger als die zur Verfügung stehende Leistung nachfragen. Ein solcher gedrosselter Betrieb des Windparks macht es notwendig, mindestens für einige der Windenergieanlagen in dem Windpark ebenfalls einen gedrosselten Betrieb vorzusehen, einige der Windenergieanlagen vollständig abzuschalten und/oder ihnen zumindest die Produktionserlaubnis zu entziehen. Unterschiedliche Verfahren zum Regeln der Leistungsabgabe eines Windparks sind bekannt, beispielsweise aus WO 2010/028954 A2, EP 2 896 102 B1, EP 2 824 322 A1 oder EP 2 757 250 A1.

Aus EP 2 028 368 B1 ist ein Verfahren zum Betreiben eines Windparks bekannt geworden, bei dem eine übergeordnete Steuerung jeden Sollwert für die einzelnen Windenergieanlagen abhängig von einem aktuell maximal möglichen Wert, den die Windenergieanlage erzeugen kann, bestimmt. Somit erfolgt eine Verteilung der insgesamt durch den Windpark bereitzustellenden Größe abhängig davon, welchen Beitrag jede einzelne Windenergieanlage aktuell bereitstellen kann. Zur Bestimmung des Sollwerts wird dabei der maximal mögliche Wert des Windparks durch die Anzahl der Windenergieanlagen in dem Windpark dividiert und mit dem Quotienten aus dem aktuell maximal möglichen Wert der betreffenden Windenergieanlage und dem Mittelwert der aktuell maximal möglichen Werte aller Windenergieanlagen im Windpark gewichtet. Einzelnen Windenergieanlagen kann bei diesem Verfahren ein Sollwert zugeordnet werden, der unterhalb des Wertes liegt, bei dem die Windenergieanlage dauerhaft betrieben werden kann. In Folge kann es zur Abschaltung solcher Anlagen kommen, wodurch sich die Leistungsabgabe des Windparks verändert. Kann der dem Windpark vorgegebene Sollwert nicht durch die im Betrieb verbliebenen Anlagen erreicht werden, kann dies zur Zuschaltung einer weiteren, ggf. auch einer gerade erst abgeschalteten Anlage führen. Das Verfahren kann abhängig von der Stärke der Limitierung und den vorliegenden Betriebsbedingungen zu häufigen Abschaltvorgängen von Windenergieanlagen führen. Zudem sind kontinuierlich wechselnde Sollwerte für jede der Windenergieanlagen innerhalb des Windparks die Folge, was bei ungünstigen Windverhältnissen die Windenergieanlagen in eine gekoppelte Schwingung versetzen kann. Häufige Aus- und Einschaltvorgänge können auch zu einem erhöhten Verschleiß der Windenergieanlagen führen. Zudem führt die Abschaltung von Windenergieanlagen zu einer Einschränkung des Leistungsbereiches, der durch den Windpark innerhalb von kurzer Zeit geliefert werden kann, da ein erneutes Starten einer Anlage abhängig von den vorliegenden Windbedingungen einige Minuten in Anspruch nehmen kann. Da zu erwarten ist, dass der limitierte Betrieb mit der zunehmenden Netzdurchdringungen von Windenergieanlagen zur Regel wird, besteht ein Bedarf für ein verbessertes Verfahren zur Sollwertverteilung bei einem limitierten Betrieb.

EP 3 754 178 A1 beschreibt ein Verfahren zum Betreiben eines Windparks mit einer Vielzahl von Windenergieanlagen, die ansprechend auf einen empfangenden Sollwert einer leistungsbezogenen elektrischen Größe zur Abgabe einer Leistung ansteuerbar und/oder einregelbar sind, wobei das Verfahren eine verteilbare Leistungsmenge unter Berücksichtigung einer Minimalleistung der Windenergieanlagen iterativ auf die Windenergieanlagen umlegt. Ein weiteres Verfahren ist in EP 3 570 401 A1 beschrieben.

Der Erfindung liegt die Aufgabe zugrunde, ein Verfahren zum Betreiben eines Windparks bereitzustellen, welches die Leistungsabgabe der einzelnen Windenergieanlagen in dem Windpark in effizienter und zuverlässiger Weise regelt. Die Erfindung löst die Aufgabe durch das Verfahren gemäß Anspruch 1 und den

Windpark nach Anspruch 10. Vorteilhafte Ausgestaltungen sind Gegenstand der abhängigen Ansprüche, der Beschreibung sowie der Figuren.

Das erfindungsgemäße Verfahren dient zum Betreiben eines Windparks mit einer Vielzahl von Windenergieanlagen, denen jeweils ein minimales Leistungslimit zugewiesen ist. Dem Windpark ist ein Leistungssollwert der einzuspeisenden Leistung vorgegeben, abhängig von diesem erfolgt eine Zu- und Abschaltung einzelner Windenergieanlagen. Die Zu- und Abschaltung von Windenergieanlagen in dem Windpark erfolgt nur für solche Windenergieanlagen, deren aktueller Betriebszustand ein Zu- bzw. Abschalten erlaubt. Das erfindungsgemäße Verfahren nimmt eine Priorisierung der zu- und abzuschaltenden Anlagen gegenüber den anderen Anlagen in dem Windpark vor. Erfindungsgemäß erfolgt die Priorisierung abhängig von einem den Windenergieanlagen zugeordneten minimalen Leistungslimit. Windenergieanlagen können bei einer Leistungsabgabe oberhalb des minimalen Leistungslimits dauerhaft betrieben werden. Die Priorisierung der Windenergieanlagen abhängig von ihrem jeweiligen minimalen Leistungslimit stellt sicher, dass die in dem Windpark einspeisenden Windenergieanlagen zuverlässig in ihrem Betrieb geregelt werden.

Erfindungsgemäß wird jeder der Windenergieanlagen ein aktueller Wert für ihr minimales Leistungslimit zugewiesen. Dies bedeutet, dass den Windenergieanlagen das minimale Leistungslimit nicht nur statisch aufgrund ihrer Bauweise und technischen Realisierung zugewiesen ist, sondern der Wert auch variabel vorgegeben wird unter Berücksichtigung der Betriebs- und/oder Umgebungsbedingungen der jeweiligen Windenergieanlage. Bauliche Einschränkungen können bei einer variablen Vorgabe bevorzugt ebenfalls berücksichtigt werden.

Erfindungsgemäß wird aus einer Menge der zugeschalteten Windenergieanlagen des Windparks diejenige Windenergieanlage zuerst abgeschaltet, die im Vergleich zu den übrigen Windenergieanlagen einen großen Wert für ihr minimales Leistungslimit besitzt. Entsprechend wird aus der Menge der nicht zugeschalteten, aber zuschaltbaren Windenergieanlagen des Windparks diejenige Windenergieanlage zuerst zugeschaltet, die relativ zu den übrigen Windenergieanlagen einen kleinen Wert für ihr minimales Leistungslimit besitzt. Im Folgenden wird bei der Bezeichnung einer Windenergieanlage als zuschaltbar impliziert, dass diese nicht zugeschaltet sind, aber zugeschaltet werden könnte. Bei beiden Kriterien erfolgt eine Priorisierung der Windenergieanlage, abhängig von dem minimalen Leistungslimit. Beiden Ansätzen ist auch gemeinsam, dass eine möglichst große Regelbarkeit für den Windpark bereitgestellt wird. Dazu werden diejenigen Windenergieanlagen zuerst abgeschaltet, die ein großes minimales Leistungslimit besitzen. Diese Anlagen können, abhängig von den vorliegenden Windbedingungen, mit einer höheren Wahrscheinlichkeit nicht zuverlässig und dauerhaft stabil bei Leistungswerten unterhalb ihres minimalen Leistungslimits betrieben werden und schränken den Regelbereich für die Leistungsabgabe des Windparks durch ihre größere Limitierung stärker ein als andere Windenergieanlagen mit einem geringeren minimalen Leistungslimit. Insofern werden bei der Abschaltung Windenergieanlagen mit großen Werten für ihr minimales Leistungslimit bevorzugt, während bei der Zuschaltung Windenergieanlagen mit kleinen Werten für ihr minimales Leistungslimit bevorzugt werden. Erzielt wird hiermit der ebenfalls erstrebenswerte Effekt, dass der Regelungsbereich des Windparks vergrößert werden kann und sich damit auch die Dynamik der Regelung verbessert.

Das minimale Leistungslimit ist bevorzugt ein minimaler Wirkleistungswert der Windenergieanlage, der eine Vielzahl von Aspekten an der Windenergieanlage abbilden kann. Beispielsweise kann das minimale Leistungslimit von der Konfiguration der Windenergieanlage im Sinne ihres baulichen Designs abhängen. Das minimale Leistungslimit kann beispielsweise auch von den Randbedingungen für den Betrieb eines Hauptlagers und/oder eines Getriebelagers der Windenergieanlage abhängen, welche durch ein ungünstiges Verhältnis von Drehmoment und Drehzahl nicht überbeansprucht werden sollen. Da Drehzahl und Drehmoment nicht für jede Leistungsvorgabe beliebig frei eingestellt werden können, schützt die Vorgabe eines minimalen Leistungslimits die Komponenten der Windenergieanlage vor übermäßigem Verschleiß. Auch andere Kriterien, wie beispielsweise das Anströmverhalten an den Standorten der Windenergieanlagen im Park, die Windrichtung, Schwankungen der Windgeschwindigkeit und/oder Schwankungen in dem Leistungssollwert des Windparks können mit einfließen, um ein minimales Leistungslimit für die Windenergieanlage vorzugeben. Grundsätzlich legt das minimale Leistungslimit einer Windenergieanlage fest, dass für Leistungswerte oberhalb des minimalen Leistungslimits die Windenergieanlage dauerhaft und auch nach Möglichkeit belastungsarm betrieben werden kann. Bei Leistungswerten unterhalb des minimalen Leistungslimits kann der Fall auftreten, dass kein zuverlässiger und stabiler Betrieb der Windenergieanlage möglich ist oder einzelne Komponenten der Windenergieanlage überproportional beansprucht werden. Bei der Vorgabe des minimalen Leistungslimits können auch Netzgrößen wie die Netzspannung oder die Netzfrequenz berücksichtigt werden. Das minimale Leistungslimit kann beispielsweise proportional zu einer Abweichung einer Netzgröße von ihrem Nennwert verändert werden. Auch ein nicht-linearer Zusammenhang ist denkbar. Auch eine Hysterese oder ein Totband ließen sich berücksichtigen.

In einer bevorzugten Weiterbildung des erfindungsgemäßen Verfahrens werden zusätzliche Kriterien für das Zu- und Abschalten von Windenergieanlagen definiert. Als Grundkriterium ist vorgesehen, dass ein Vergleich mit den übrigen Windenergieanlagen die ab- bzw. zuzuschaltende Windenergieanlage festlegt, die jeweils über ein größtes bzw. kleinstes minimales Leistungslimit relativ zu den anderen Windenergieanlagen verfügen. Die zusätzlichen Kriterien dienen dazu, in einem Fall, in dem die Grundkriterien nicht eindeutig eine zu- oder abzuschaltende Windenergieanlage festlegen, über die zusätzlichen Kriterien festzulegen, welche Windenergieanlage aus der Menge der nach den Grundkriterien bevorzugt ab- bzw. zuzuschaltenden Windenergieanlagen zu- oder abgeschaltet werden soll. Für die abzuschaltende Windenergieanlage kann vorgesehen sein, dass von den bevorzugt abzuschaltenden Windenergieanlagen mit einem großen Wert für ihr minimales Leistungslimit die abzuschaltende Anlage nach dem Stand eines der Anlage zugeordneten Ausschalt-Zählers ausgewählt wird. Der Ausschalt-Zähler einer Windenergieanlage ist eingerichtet, die Anzahl der Ausschaltvorgänge zu zählen und zu speichern, welche die Windenergieanlage über ihren bisherigen Lebenszyklus bereits erfahren hat. Der Zähler kann bevorzugt softwareimplementiert sein. Er kann jeweils in der Steuerungssoftware der einzelnen Anlagen realisiert sein. Alternativ kann auch eine Zählerfunktion in der Steuerungssoftware des Windparks vorgesehen sein, welche die Ausschaltvorgänge der einzelnen Windenergieanlagen erfasst. Dabei wird die Windenergieanlage mit einem kleinen Wert ihres Ausschalt-Zählers beim Ab- bzw. Zuschalten bevorzugt. Dieses zusätzliche Kriterium stellt sicher, dass bei einer Auswahl mit gleichem oder annähernd gleichem minimalen Leistungslimit diejenige Windenergieanlage bevorzugt wird, die in der Vergangenheit noch nicht so häufig abgeschaltet wurde, deren Ausschalt-Zähler also einen niedrigeren Zählerwert aufweist. Das Abschalten von Windenergieanlagen aufgrund ihres minimalen Leistungslimits wird somit für Windenergieanlagen reduziert oder vermieden, welche in der Vergangenheit bereits häufig abgeschaltet wurden. Eine ungleichmäßige Belastung einzelner Windenergieanlagen durch eine besonders häufige Abschaltung einer Anlage im Vergleich mit anderen Windenergieanlagen wird somit mit Vorteil vermieden. Alternativ kann der Zähler auch Einschaltvorgänge erfassen. Der Einschalt-Zähler und der Ausschalt-Zähler sollten im Normalfall nur um den Wert eins voneinander abweichen, so dass die Begriffe Einschalt-Zähler und Ausschalt-Zähler im Wesentlichen als Synonym verstanden werden können und im Rahmen dieser Beschreibung vorrangig eine bessere Abgrenzung gegenüber dem nachfolgend beschriebenen Betriebsstundenzähler erlauben.

Alternativ oder zusätzlich zu dem Stand des Ausschalt-Zählers kann bei dem zusätzlichen Kriterium auch auf einen Betriebsstundenzähler abgestellt werden. Dies bedeutet, die abzuschaltende Windenergieanlage wird aus der Menge der bevorzugt abzuschaltenden Windenergieanlagen mit einem großen Wert für ihr minimales Leistungslimit nach dem Stand ihres Betriebsstundenzählers ausgewählt, wobei Windenergieanlagen mit einer großen Zahl an Betriebsstunden bevorzugt ausgewählt werden. Auch bei diesem Kriterium ist ähnlich wie beim Ausschalt-Zähler vorgesehen, die durch den Betrieb anfallende Abnutzung der einzelnen Windenergieanlagen möglichst gleichmäßig auf die Anlagen im Windpark zu verteilen. Haben zwei Windenergieanlagen beide einen großen Wert für ihr minimales Leistungslimit, so wird diejenige Windenergieanlage abgeschaltet, die in der Vergangenheit länger betrieben worden ist und somit einen höheren Wert an ihrem Betriebsstundenzähler aufweist. Der Betriebsstundenzähler kann eingerichtet sein, lastnormierte Betriebsstunden zu erfassen. Dabei wird eine erfasste Zeitperiode der Betriebszeit, z.B. eine Minute oder eine Stunde, mit einem Lastfaktor für diese Zeitperiode multipliziert und zu einer lastnormierten Gesamtbetriebszeit aufsummiert. Der Lastfaktor kann abhängig von in einer Zeitperiode erfassten oder dafür abgeschätzten Lasten vorgegeben sein. Die Berücksichtigung der Lasten erlaubt eine gleichmäßigere Verteilung der an den einzelnen Windenergieanlagen auftretenden Lasten über die Gesamtheit der Windenergieanlagen des Windparks.

Auch der Betriebsstundenzähler der Windenergieanlagen kann für die Auswahl der zuzuschaltenden Windenergieanlage aus einer Menge bevorzugt zuzuschaltender Windenergieanlagen mit einem kleinen Wert für ihr minimales Leistungslimit als zusätzliches Kriterium gewählt werden. Demnach wird für die zuzuschaltende Windenergieanlage unter denen mit einem kleinen Wert für ihr minimales Leistungslimit diejenige Windenergieanlage ausgewählt, die erst eine geringe Anzahl von Betriebsstunden gelaufen ist. Auch diese Auswahl für Windenergieanlagen mit einem großen Wert für ihr minimales Leistungslimit trägt dazu bei, dass die Windenergieanlagen im Windpark beim Zuschalten untereinander gleichmäßiger belastet werden. Ebenso können lastnormierte Betriebsstunden als Kriterium herangezogen werden.

Kann auf der Basis der weiteren Auswahlkriterien keine einzelne Windenergieanlage bestimmt werden, die bevorzugt abzuschalten bzw. zuzuschalten ist, sind also minimales Leistungslimit und Zählerstände ähnlich bzw. gleich, kann eine eindeutige Abbruchbedingung vorgegeben sein, mittels welcher in jedem Fall eine eineindeutige Auswahl einer Windenergieanlage getroffen werden kann. Beispielsweise kann die Auswahl anhand der statischen IP-Adressen der Windenergieanlagen oder einer vordefinierten Nummerierung der Windenergieanlagen im Windpark getroffen werden. So kann als Abbruchbedingung z.B. vorgesehen sein, in dem Fall, dass kein Auswahlkriterium eine eindeutige Auswahl erzeugt hat, die Windenergieanlage mit der kleinsten IP-Adresse ab- bzw. zuzuschalten. Alternativ kann vorgesehen sein, dass die Windenergieanlage mit der größten IP-Adresse ab- bzw. zugeschaltet wird. Durch die Vorgabe einer eindeutigen Abbruchbedingung kann immer eine nachvollziehbare Auswahl getroffen werden und es wird keine Entscheidung dem Zufall überlassen.

Auch andere eine Windenergieanlage eindeutig festlegende Abbruchbedingungen sind möglich.

Im Hinblick auf eine Vergleichmäßigung der Belastungen der Windenergieanlagen hat es sich als besonders vorteilhaft herausgestellt, ein sogenanntes Binning, also eine Klassen- bzw. Intervalleinteilung durchzuführen. Bei dem Binning werden unterschiedliche nahe beieinander liegende Werte, wie beispielsweise unterschiedliche minimale Leistungslimits, in Leistungslimitintervallen zusammengefasst. Auch mittels des Rundens von Werten für die Leistungslimits kann ein Binning erfolgen. Für den Vergleich der Werte untereinander wird ein beispielhafter Wert aus dem jeweiligen Leistungslimitintervall verwendet, mittels dem die einzelnen Windenergieanlagen sortiert werden. Mit einem Binning können insbesondere die zusätzlichen Kriterien zur Vergleichmäßigung der Belastung in dem Windpark stärker in den Vordergrund gestellt werden. Dies kann sachgerecht sein, da im Hinblick auf Belastung und Verschleiß an den Windenergieanlagen der durch das minimale Leistungslimit vorgegebene Wert nicht allein ausschlaggebend ist. Je nach Breite der Leistungsintervalle, in denen die minimalen Leistungslimits zusammengefasst werden, werden die zusätzlichen Kriterien mehr oder weniger stark in den Vordergrund gestellt.

Eine besonders vorteilhafte Auswahl der Windenergieanlagen bei ihrem Zu- und Abschalten im Windpark kann erzielt werden, wenn der Windenergieanlage das minimale Leistungslimit abhängig von ihrem Betriebsmodus zugewiesen wird. Bei dieser Zuweisung, die abhängig vom aktuellen Betriebsmodus der Windenergieanlage erfolgt, kann das minimale Leistungslimit auch höher gesetzt werden, als es der tatsächliche Zustand der Windenergieanlage erfordert. Auf diese Weise ist es möglich, bestimmte Betriebsmodi der Windenergieanlage beim Zuschalten und Abschalten der Windenergieanlagen zu priorisieren. Bevorzugt werden die minimalen Leistungslimits für die einzelnen Betriebsmodi abhängig von der Windgeschwindigkeit und/oder der Drehzahl zugewiesen, da auf die Windenergieanlage wirkende Lasten vorrangig von der Windgeschwindigkeit abhängig sind. Auch eine Berücksichtigung der Windrichtung an den einzelnen Windenergieanlagen kann erfolgen.

Für hohe Windgeschwindigkeiten oberhalb von einer vorgegebenen Grenzwindgeschwindigkeit kann vorgesehen sein, die Windenergieanlagen in Abhängigkeit von der Windgeschwindigkeit, mit steigender Windgeschwindigkeit zunehmend, in ihrer Leistungsabgabe zu begrenzen. Bei diesem als "soft-cut-out" oder "storm-fade-out" bezeichneten Verfahren wird die Leistungsabgabe bis zum Erreichen einer vorgegebenen Abschaltwindgeschwindigkeit abgesenkt. So wird vermieden, dass solche Windenergieanlagen aus einem Betrieb bei Nennleistung in die Abschaltung gehen und damit große Sprünge in der Leistungsabgabe des Windparks auftreten. Windenergieanlagen, die im Soft-Cut-Out-Modus betrieben werden, kann mit zunehmender Leistung ein größeres minimales Leistungslimit als technisch erforderlich zugewiesen werden. Das größere minimale Leistungslimit bewirkt, dass Windenergieanlagen, die im Soft-Cut-Out-Modus betrieben werden, bevorzugt abgeschaltet werden.

Abgesehen von der betriebsmodusabhängigen Zuweisung des minimalen Leistungslimits spiegelt das minimale Leistungslimit den Wert der Leistung der jeweiligen Windenergieanlage wider, oberhalb dessen ein dauerhafter und stabiler Betrieb der Windenergieanlage möglich ist und welcher durch die Windenergieanlage mindestens einzuspeisen ist. Das minimale Leistungslimit besitzt somit selbst eine Funktion, die einen dauerhaften und stabilen Betrieb der Windenergieanlagen in dem Windpark gestattet.

Das erfindungsgemäße Verfahren sieht in einer bevorzugten Weiterbildung ferner Kriterien vor, bei denen eine Zu- oder Abschaltung von Windenergieanlagen zu erfolgen hat. Als Kriterium für die Abschaltung mindestens einer der Windenergieanlagen kann vorgesehen sein, dass die Summe der minimalen Leistungslimits aller im Produktionsbetrieb befindlichen Windenergieanlagen größer als der dem Windpark vorgegebene Leistungssollwert ist. Dieses Kriterium sorgt damit dafür, dass alle im Produktionsbetrieb befindlichen Windenergieanlagen mit einem Leistungswert beitragen können, der größer als ihr minimales Leistungslimit ist. Insofern sorgt dieses Kriterium auch dafür, dass keine der Windenergieanlagen unter ihrem minimalen Leistungslimit betrieben werden muss.

Als Kriterium für das Zuschalten einer Windenergieanlage kann ferner vorgesehen sein, dass eine gewichtete Summe der minimalen Leistungslimits aller im Produktionsbetrieb befindlichen Windenergieanlagen und des minimalen Leistungslimits der bevorzugt zuzuschaltenden Windenergieanlage kleiner als der dem Windpark vorgegebene Leistungssollwert ist. Dieses Kriterium stellt sicher, dass abhängig von der Gewichtung eine Zuschaltung vermieden wird, wenn diese aufgrund der Randbedingungen aller in Betrieb befindlichen Anlagen alsbald zu einer Abschaltung einer Windenergieanlage führen würde. Durch die Faktoren wird also vermieden, dass ein instabiler Regelungszustand entsteht, bei dem unnötig Windenergieanlagen ab- und wieder angeschaltet werden.

In einer bevorzugten Weiterbildung ist die gewichtete Summe größer als eine nicht gewichtete Addition der minimalen Leistungslimits aller im Produktionsbetrieb befindlichen Anlagen und des minimalen Leistungslimits der zuzuschaltenden Windenergieanlage. Die Gewichtung der Summe erfolgt über ein oder mehrere Gewichtsfaktoren. Für ein besseres Verständnis sei hier darauf hingewiesen, dass die nicht gewichtete Addition dazu führen kann, dass der Leistungssollwert des Windparks soweit wie möglich durch minimale Leistungslimits erfüllt wird. Dies gäbe dem Windpark zwar einen größeren Regelungsbereich bei einem steigenden Leistungssollwert für den Windpark, würde aber die Möglichkeit des Windparks, auf einen fallenden Sollwert zu reagieren, stark einschränken, da eine fallende Sollwertvorgabe dann augenblicklich mindestens eine weitere Abschaltung auslösen würde. Die Gewichtsfaktoren sind daher bevorzugt größer als 1. Bevorzugt können die Gewichtungsfaktoren abhängig von der Windgeschwindigkeit sein.

Die Erfindung betrifft gemäß Anspruch 10 zudem einen Windpark mit einer Vielzahl von Windenergieanlagen und mit mindestens einer Steuereinheit, die dazu ausgebildet ist, einzelne Windenergieanlagen abhängig von ihrem jeweiligen minimalen Leistungslimit zu- oder abzuschalten. Dabei wird auch auf das oben erläuterte Verfahren zurückgegriffen. Die zu dem Verfahren gemachten Erläuterungen gelten also entsprechend für den Windpark und seine mindestens eine Steuereinheit. Die mindestens eine Steuereinheit kann eine den Windenergieanlagen übergeordnete Steuereinheit sein, beispielsweise eine Windparksteuerung. Die übergeordnete Steuereinheit kann die Ermittlung der Sollwerte durchführen und diese insbesondere an die Steuereinheiten der einzelnen Anlagen übermitteln. Der übergeordneten Steuereinheit können über eine Schnittstelle externe Sollwerte vorgegeben werden, beispielsweise für die durch den Windpark einzuspeisende Leistung. Die übergeordnete Steuereinheit kann alternativ oder ergänzend hierzu eingerichtet sein, Sollwerte, beispielsweise für die einzuspeisende Leistung, zu ermitteln. Grundsätzlich können jedoch auch eine oder mehrere der Steuereinheiten der einzelnen Windenergieanlagen zur Ausführung des Verfahrens ausgebildet sein und dies verteilt durchführen.

Ein bevorzugtes Ausführungsbeispiel der Erfindung wird nachfolgend näher beschrieben. Es zeigen:

Fig. 1    eine Windenergieanlage in seitlicher Ansicht,

Fig. 2    ein schematisches Diagramm eines Windparks mit einer übergeordneten Steuereinheit, wobei die Windenergieanlage aus Fig. 1 Teil des Windparks ist,

Fig. 3    ein Ablaufdiagramm für das erfindungsgemäße Verfahren zur Abschaltung einer Windenergieanlage,

Fig. 4    ein weiteres Ablaufdiagramm für das erfindungsgemäße Verfahren zur Zuschaltung einer Windenergieanlage und

Fig. 5    ein Diagramm des Verlaufs vorgegebener Kennlinien für das minimale Leistungslimit, aufgetragen über der Windgeschwindigkeit.

Soweit nichts anderes angegeben ist, bezeichnen im Folgenden gleiche Bezugszeichen gleiche Gegenstände.

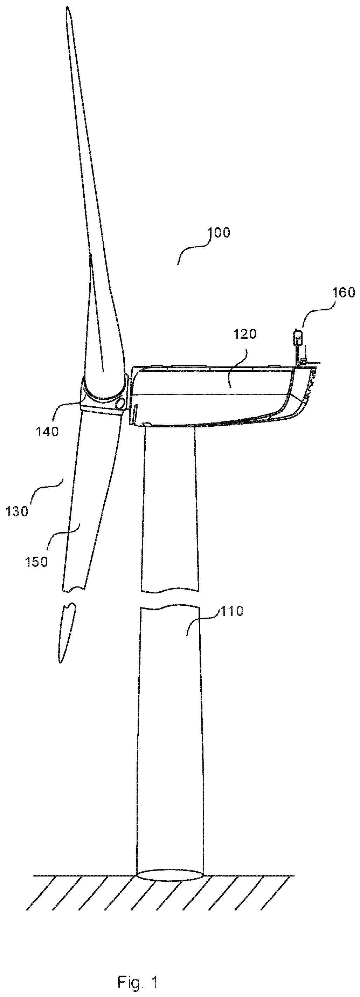

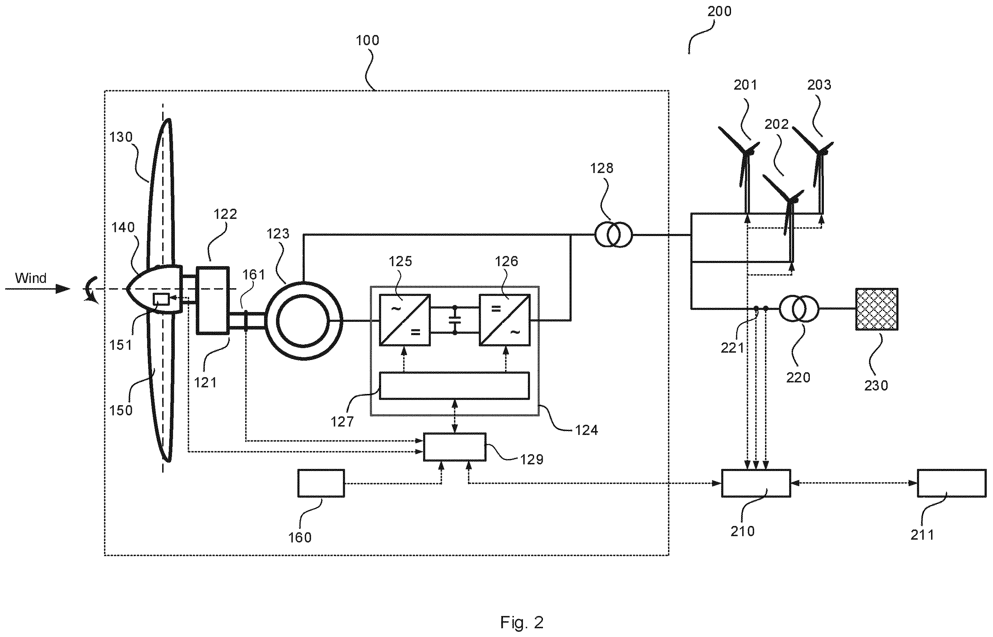

In Fig. 1 ist eine Windenergieanlage 100 ersichtlich, umfassend einen Turm 110, eine drehbar am oberen Ende des Turmes 110 angeordnete Gondel 120, einen drehbar an der Gondel 120 angeordneten Rotor 130 mit einer Rotornabe 140 und sich von der Rotornabe 140 fort erstreckenden Rotorblättern 150. Auf der Gondel ist zudem ein Sensorarray 160 dargestellt, das mit Sensoren zur Messung der Windgeschwindigkeit und der Windrichtung versehen ist. Die Windenergieanlage 100 ist geeignet für das erfindungsgemäße Verfahren und bildet insbesondere Teil eines Windparks 200, wie in Fig. 2 dargestellt.

Fig. 2 zeigt insgesamt einen Windpark 200, wobei der elektrische Aufbau der Windenergieanlage 100 besonders herausgestellt ist. Zudem sind weitere Windenergieanlagen 201, 202, 203 ersichtlich, welche allesamt Teil des Windparks 200 sind. Die Windenergieanlagen des Windparks 200 sind über eine Übergabestation 220 mit einem dreiphasigen elektrischen Übertragungsnetz 230 verbunden und können in dieses Leistung einspeisen. Die Windenergieanlagen sind jeweils über einen Mittelspannungstransformator 128, der in Fig. 2 exemplarisch für die Windenergieanlage 100 dargestellt ist, mit der Übergabestation 220 und dem elektrischen Übertragungsnetz 230 verbunden.

Der Rotor 130 der Windenergieanlage 100 nimmt ein Drehmoment aus dem Wind auf und leitet dieses über einen Antriebsstrang 121, der ein Getriebe 122 umfasst, an den Rotor eines doppeltgespeisten Asynchrongenerators 123 weiter, welcher eingerichtet ist, die aus dem Wind aufgenommene kinetische Energie in elektrische Energie umzuwandeln und in das elektrische Übertragungsnetz 230 einzuspeisen. Der Stator des Generators 123 ist über eine dreiphasige Leitung mit dem elektrischen Versorgungsnetz 230 verbunden. Der Rotor des Generators 123 ist über eine dreiphasige Leitung mit einem Wechselstrom-Umrichter 124 verbunden. Der Wechselstrom-Umrichter 124 ist netzseitig über eine dreiphasige Leitung mit dem Stator des Generators 123 und dem elektrischen Versorgungsnetz 230 verbunden. Zur besseren Übersicht werden elektrische Leitungen in der Fig. 2 schematisch einphasig dargestellt.

Der Wechselstrom-Umrichter 124 weist einen rotorseitigen Umrichter 125 und einen netzseitigen Umrichter 126 auf. Zwischen den Umrichtern ist ein Gleichstromzwischenkreis vorgesehen. Ein Umrichterregler 127 des Wechselstrom-Umrichters 124 ist dazu eingerichtet, über eine Regelung der Rotorströme in dem Rotor des Generators 123 ein Generatormoment und damit die über den Statorkreis eingespeiste Leistung einzustellen. Der Umrichterregler 127 des Wechselstrom-Umrichters 124 ist weiterhin dazu eingerichtet, die über den netzseitigen Umrichter 126 eingespeiste Leistung einzustellen. Hierzu kann der Umrichterregler 127 dem rotorseitigen und/oder dem netzseitigen Umrichter 125, 126 Stellgrößen für Ströme, Spannungen, Leistungen und/oder das Generatormoment vorgeben. Für die Ströme und Leistungen können Blind- und/oder Wirkgrößen vorgegeben werden. Entsprechende Regelungsverfahren sind allgemein für doppelt-gespeiste Asynchronmaschinen bekannt. Der rotorseitige Umrichter 125 stellt die Rotorströme und damit das Generatormoment durch die Schaltung von leistungselektronischen Bauelementen ein. Zur Regelung des Generatormoments kommuniziert der Umrichterregler 127 mit einem Windenergieanlagenregler 129 und erhält von diesem insbesondere einen Sollwert für ein Generatormoment oder eine abzugebende Wirkleistung.

Die Windenergieanlage 100 weist einen Drehzahlsensor 161 auf. Dieser kann an einer Stelle an dem Antriebsstrang 121 vorgesehen sein, der eine Messung der Drehzahl des Antriebstrangs zulässt, beispielsweise an einer Getriebeausgangswelle, die mit dem Rotor des Generators 123 verbunden ist. Von dem Drehzahlsensor 161 gemessene Drehzahlwerte liegen als Eingangsgröße an dem Windenergieanlagenregler 129 an. Weiterhin liegen an dem Windenergieanlagenregler 129 Größen an, die mittels der Sensoren des Sensorarrays 160 erfasst werden. Beispielsweise liegen die Windgeschwindigkeit und die Windrichtung als Eingangsgrößen an dem Windenergieanlagenregler 129 an. Die Gondel 120 der Windenergieanlage und damit ihr Rotor 130 kann über eine Azimutverfahreinrichtung (nicht gezeigt) gegenüber der Windrichtung ausgerichtet werden.

Der Windenergieanlagenregler 129 ist weiterhin mit einer Rotorblattwinkelstellvorrichtung 151 verbunden, mittels derer der Windenergieanlagenregler 129 die Pitchwinkel der Rotorblätter 150 steuert. Der Windenergieanlagenregler 129 dient generell dazu, die Windenergieanlage 100 in ihrem Betrieb zu regeln. Der Windenergieanlagenregler 129 kann beispielsweise als speicherprogrammierbare Steuerung (SPS) ausgebildet sein und eine Software zur Regelung der Windenergieanlage aufweisen. Beispielsweise empfängt der Windenergieanlagenregler 129 Signale und Steuerbefehle von einem Windparkregler 210, mit welchem er über eine Datenleitung kommuniziert. In dem vorliegenden Ausführungsbeispiel ist der Windparkregler 210 als übergeordnete Steuereinheit dazu eingerichtet, das erfindungsgemäße Verfahren auszuführen und Signale für die Regelung des Windparks 200 an die einzelnen Windenergieanlagen 100, 201, 202, 203 bzw. deren Windenergieanlagenregler bereitzustellen. Neben Sollwertvorgaben können diese Signale auch eine Produktionserlaubnis umfassen. Der Windparkregler 210 kann beispielsweise als speicherprogrammierbare Steuerung (SPS) ausgebildet sein und eine Software zur Regelung des Windparks aufweisen. Der Windparkregler 210 ist über eine Datenleitung mit einer externen Regelungseinrichtung 211, beispielsweise einer Netzleitstelle, verbunden und erhält von dieser Sollwertvorgaben für die von dem Windpark einzuspeisende Leistung. Der Windparkregler 210 ist eingerichtet, die Wirkleistungsabgabe des Windparks in Abhängigkeit von Sollwertvorgaben von der externen Regelungseinrichtung 211 einzustellen. Diese Sollwertvorgaben können beispielsweise auf Basis einer von dem Windparkregler 210 an die externe Regelungseinrichtung 211 gemeldeten verfügbaren Wirkleistung des Windparks und dem Leistungsbedarf des Energieversorgungsnetzes vorgegeben sein und zu einer Leistungslimitierung für den Windpark führen. Alternativ oder ergänzend dazu kann die Wirkleistungssollwertvorgabe für den Windpark durch den Windparkregler 210 auf Basis von Messwerten erfolgen, die mittels einer Sensoreinheit 221 am oder in der Nähe des Netzverknüpfungspunktes des Windparks erfasst werden und die als Eingangsgrößen an dem Windparkregler 210 anliegen. Beispielsweise kann die Wirkleistungssollwertvorgabe basierend auf einer gemessenen Netzfrequenz, der Netzspannung und/oder der eingespeisten Blindleistung vorgegeben werden. Entsprechende Verfahren sind aus dem Stand der Technik bekannt.

Unter gemessenen Werten oder Eingangswerten werden im Rahmen dieser Beschreibung nicht nur eigentliche Messwerte verstanden, sondern insbesondere auch solche Größen, die aus den gemessenen Werten oder Verknüpfungen von unterschiedlichen Werten berechnet wurden. Dabei können auch Größen als zeitliche Mittelwerte über einen geeigneten Zeitraum bestimmt werden. Für einige Werte können auch geeignete Schätzwerte als Eingangsgrößen verwendet werden. Beispielsweise kann die Windgeschwindigkeit nicht nur durch eine direkte Messung, sondern auch als Schätzwert aus Leistung, Drehzahl und Pitchwinkel ermittelt werden.

Bei einer Steuerung des Windparks ist darauf zu achten, dass jede für den Produktionsbetrieb vorgesehene Windenergieanlage einen Sollwert übermittelt bekommt, der ihr aktuelles minimales Wirkleistungslimit nicht unterschreitet. Bei den nachfolgenden Ausführungsbeispielen wird auf die Wirkleistung und das Wirkleistungslimit der einzelnen Windenergieanlagen abgestellt. Selbstverständlich könnte hier auch eine andere elektrische Größe, wie beispielsweise Schein- oder Blindleistung gewählt werden.

Je nach Leistungssollwert, der dem Windpark vorgegeben wird, kann die Situation auftreten, dass einzelne Windenergieanlagen abgeschaltet oder ihnen die Freigaben für den Produktionsbetrieb entzogen werden müssen. Auch kann es erforderlich sein, einzelne Windenergieanlagen, die abgeschaltet sind oder die keine Produktionserlaubnis besitzen, zuzuschalten. Um eine möglichst gute Regelbarkeit für den Windpark herzustellen, ist es erforderlich, diejenigen Windenergieanlagen für eine Abschaltung auszuwählen, welche die Regelbarkeit des Windparks stärker einschränken als andere, bzw. solche Windenergieanlagen zuzuschalten, welche die Regelbarkeit des Windparks weniger stark einschränken als andere. Insbesondere beschränken Windenergieanlagen mit einem hohen Wert für ihr aktuelles minimales Wirkleistungslimit die Regelbarkeit. Dies sei an einem leicht überschaubaren Beispiel dargestellt. Ein Windpark mit fünf Windenergieanlagen, deren aktuelle verfügbare Leistung jeweils etwa 2 MW beträgt, soll auf einen Sollwert von 2 MW für den Windpark limitiert werden. Vier der Windenergieanlagen haben ein aktuelles minimales Wirkleistungslimit (CMPL = current minimum active power limit) von 400 kW. Eine fünfte Windenergieanlage hat ein CMLP von 1,5 MW. Wird die Windenergieanlage mit dem größten CMPL, also die Windenergieanlage mit 1,5 MW abgeschaltet, so kann der Windpark im Bereich von 1,6 MW (4 x 400 kW) bis 8 MW (4 x 2 MW) geregelt werden. Schaltet man dagegen die Windenergieanlage mit dem CMPL-Wert von 1,5 MW nicht ab, müssen zwangsläufig drei Windenergieanlagen mit ihrem aktuellen CMPL von 400 kW abgeschaltet werden. Im Produktionsbetrieb verblieben dann nur zwei der fünf Anlagen, wobei der Windpark dann in einem Bereich von 1,9 MW (= 1,5 MW + 0,4 MW) bis 4 MW regelbar wäre. Der Bereich, in dem der Windpark nun geregelt werden kann, ist deutlich kleiner als der Bereich, der sich ergibt, wenn die Windenergieanlage mit dem größten CMPL von 1,5 MW abgeschaltet wird. Erhält der Windpark nun einen neuen Sollwert von 6 MW übermittelt, kann der Windpark diesen Sollwert erst nach dem Start wenigstens einer weiteren Windenergieanlage erreichen, wobei mehrere zehn Sekunden bis einige Minuten vergehen können, bis die gestarteten Anlagen den ihnen zugeteilten Sollwert erreichen. Der Windpark mit dem breiten Regelbereich kann hingegen den neuen Sollwert von 6 MW innerhalb weniger Sekunden erreichen. Ähnliche Überlegungen treffen auch auf das Zuschalten von Windenergieanlagen zu, wenn die in einem Windpark verfügbare Wirkleistung für eine Sollwertvorgabe nicht ausreicht, weil Windenergieanlagen abgeschaltet oder nicht im Produktionsbetrieb sind. In diesem Fall ist es wünschenswert, die zuzuschaltenden Windenergieanlagen so auszuwählen, dass eine möglichst gute Regelbarkeit für den Windpark sichergestellt ist. Bevorzugt ist also eine Anlage mit einem kleinen CMPL-Wert zuzuschalten.

Für ein besseres Verständnis der Erfindung und deren Beschreibung seien folgende Größen definiert: Jeder der Windenergieanlagen j in dem Windpark wird durch den Windparkregler 210 ein individueller Leistungssollwert $SP_j$ vorgegeben. Die Vorgabe erfolgt bevorzugt unter Einbeziehung des momentan verfügbaren Leistungswerts der Anlage j. Dieser Wert sei mit $PA_j$ bezeichnet. Der momentan verfügbare Leistungswert $PA_j$ wird kontinuierlich durch die einzelnen Windenergieanlagen bzw. deren Windenergieanlagenregler an den Windparkregler übermittelt. Die Größe ist dabei abhängig von den an den einzelnen Windenergieanlagen vorliegenden Windbedingungen, kann aber auch von anderen Randbedingungen abhängen. So können beispielsweise Betriebsbedingungen der Windenergieanlagen und deren Komponenten im Hinblick auf auftretende mechanische und thermische Belastungen berücksichtigt werden. Auch Randbedingungen, wie beispielsweise ein schallreduzierter Betrieb oder ein drehzahlbegrenzter Betrieb können bei der Bestimmung des momentan verfügbaren Leistungswerts berücksichtigt werden. Der Windenergieanlagenregler berechnet den Wert für $PA_j$ für seine jeweilige Anlage und übermittelt diesen in regelmäßigen Abständen an den Windparkregler. Dies kann beispielsweise in einem Takt von ca. 10 Millisekunden erfolgen.

$CMPL_j$ bezeichnet das aktuelle minimale Wirkleistungslimit der j-ten Windenergieanlage. Zum besseren Verständnis sei angenommen, dass die Windenergieanlage mit dem Index j auch die j-te Windenergieanlage im Windpark sei. Externe Sollwertvorgaben an die Windenergieanlage werden durch den CMPL-Wert von unten begrenzt. Wird einer Windenergieanlage, aus welchen Gründen auch immer, ein Sollwert unterhalb von CMPL zugewiesen, wird diese den Sollwert entweder auf den Wert von CMPL anheben oder die Windenergieanlage wird sich abschalten, ohne dass eine Priorisierung für diese Windenergieanlage stattgefunden hat. Dies dient einem Schutz vor übermäßigem Verschleiß.

Bevorzugt werden die $CMPL_j$-Werte regelmäßig durch die einzelnen Windenergieanlagen bzw. deren Regler ermittelt und an den Windparkregler übermittelt. Dies kann beispielsweise in der gleichen Taktung erfolgen, in welcher die Windenergieanlagen ihre verfügbare Leistung übermitteln. Alternativ kann auch nur dann ein CMPL-Wert durch die Anlage j übermittelt werden, wenn sich der $CMPL_j$-Wert der j-ten Windenergieanlage verändert hat.

Die Windenergieanlagenregler sind eingerichtet, für die Durchführung des Verfahrens benötigte Zählerstände (Einschaltvorgänge, Ausschaltvorgänge, Betriebsstunden, lastnormierte Betriebsstunden) an den Windparkregler zu übermitteln. Der Windparkregler kann alternativ auch über entsprechende Zählerfunktionen verfügen und die jeweiligen Zählerstände der einzelnen Windenergieanlagen erfassen.

Das aktuelle minimale Leistungslimit berücksichtigt grundsätzlich die Konfiguration der Windenergieanlage und kann hiervon ausgehend auch einen aktuellen Betriebszustand sowie die dabei auftretenden Lasten und andere den Betrieb der Windenergieanlage begrenzende Effekte berücksichtigen. Beispielsweise können Randbedingungen für den Betrieb des Getriebes des Triebstrangs dimensionierend auf das aktuelle minimale Wirkleistungslimit wirken. Wird als Getriebelager ein Wälzlager eingesetzt, kann dies beispielsweise eine Anforderung für ein minimales Verhältnis von Drehzahl und Drehmoment und folglich - abhängig von der vorliegenden Drehzahl - für das minimale Wirkleistungslimit ergeben. Auch andere in der Windenergieanlage eingesetzte Lager, die beispielsweise zur Aufnahme der Hauptwelle der Windenergieanlage eingesetzt werden, können dimensionierend für das minimale Wirkleistungslimit wirken. Abhängig vom Betriebszustand wirken auf die Wälzkörper solcher Lager in ihren Laufzonen Radialkräfte. Für ein Wälzlager kritische Betriebszustände, die zu Schäden an dem Lager führen können, liegen dann vor, wenn beispielsweise bei hohen Drehzahlen nur ein geringes Drehmoment an dem Lager anliegt. Ein solcher lastarmer Betriebszustand kann auftreten, wenn die Windenergieanlage nahe ihrer Synchrondrehzahl betrieben wird, beispielsweise beim Anfahren. Während des Normalbetriebs ist ein solcher Betrieb jedoch zu vermeiden.

Auch Anforderungen zur Vermeidung eines Zahnflankenspiels im Getriebe der Windenergieanlage können limitierend wirken. So können beispielsweise kurzzeitige Schwankungen des Drehmoments Schädigungen an den Zahnrädern im Getriebe herbeiführen.

Allgemein können kritische Betriebszustände bei der Regelung der Windenergieanlage berücksichtigt und als limitierende Größe bei der Bestimmung des minimalen Leistungslimits bereitgestellt werden. So kann beispielsweise, abhängig von der Drehzahl oder der Windgeschwindigkeit, das Drehmoment und damit das Produkt aus Drehmoment und Drehzahl für eine Leistungsbegrenzung verwendet werden. Hierbei kann auch berücksichtigt werden, dass Drehzahl und Drehmoment in der Regel nicht beliebig frei einstellbar sind, sondern sich der einstellbare Betriebsbereich, abhängig von vorliegenden Windgeschwindigkeiten, einstellen lässt. Das aktuelle minimale Wirkleistungslimit kann beispielsweise auch abhängig von der aktuellen Windrichtung oder auftretenden Turbulenzen vorgegeben werden. Es ist auch möglich, unterschiedliche Größen gleichzeitig zu berücksichtigen. So werden beispielsweise unterschiedliche Verläufe für das minimale Wirkleistungslimit in Abhängigkeit von der Windgeschwindigkeit und abhängig von der Windrichtung bei der Vorgabe des minimalen Wirkleistungslimits berücksichtigt.

Das minimale Wirkleistungslimit kann beispielsweise in Form einer Tabelle, hier einer Look-up-Tabelle in Abhängigkeit wenigstens einer Istgröße vorgegeben werden. Alternativ können auch Funktionen hinterlegt werden. Die Regelungseinrichtungen sind dafür mit einem entsprechenden Speicher versehen. Die Abhängigkeit von weiteren Größen kann beispielsweise über weitere Tabellen, mehrdimensionale Funktionen oder Scharparameter abgebildet werden. Für die Festlegung des aktuellen minimalen Wirkleistungslimits können gleitende Mittelwerte herangezogen werden, beispielsweise ein 10-Minuten-Mittelwert der Windgeschwindigkeit. Ebenso hat es sich im Hinblick auf eine optimale Ansteuerung des Windparks als vorteilhaft herausgestellt, Windgeschwindigkeitsbereiche zu definieren, in denen über unterschiedlich lange Zeitdauern gemittelt wird. Auch können Look-up-Tabellen in Abhängigkeit von einem Betriebsmodus der Windenergieanlage vorgesehen sein.

Für einen ersten Aspekt des erfindungsgemäßen Verfahrens sei nachfolgend ein Windpark vorgesehen, der aus n > 1 Windenergieanlagen besteht. Die Menge der Indizes für die Windenergieanlagen sei in der Menge N zusammengefasst, wobei hier zwischen den zugeschalteten Windenergieanlagen bzw. Windenergieanlagen mit Produktionserlaubnis mit der Indexmenge $N_{on}$ und der Indexmenge der zuschaltbaren Windenergieanlagen $N_{off}$ unterschieden wird. Der Fall, dass der Windparksollwert $SP_P$ kleiner als die Summe der CMPL-Werte aus dem Windpark ist, lautet als Formel ausgedrückt:

$$ SP_P < \sum_j CMPL_j, j \in N_{on}. $$

In diesem Fall sind Windenergieanlagen aus dem Produktionsbetrieb zu nehmen bzw. auszuschalten, bis die Bedingung erfüllt ist, dass der Sollwert des Windparks größer gleich der Summe der CMPL-Werte für die bei diesem Schritt zugeschalteten Windenergieanlagen bzw. Windenergieanlagen mit Produktionserlaubnis $N_{on}$ ist. Zur besseren Übersicht wird auf eine exakte Notierung der Menge der zuschaltbaren Windenergieanlagen bzw. derjenigen mit Produktionserlaubnis verzichtet und die Menge immer als Indexmenge $N_{on}$ bezeichnet. Auch zeitliche Aspekte während des Ablaufs des Verfahrens werden zunächst ausgeblendet. Als Formel ausgedrückt:

$$ SP_P \geq \sum_j CMPL_j, j \in N_{on}. $$

Sollten in dem Windpark auch Windenergieanlagen enthalten sein, denen kein minimales Leistungslimit zugeordnet werden kann oder keines zugeordnet ist, so wird diesen für das erfindungsgemäße Verfahren ein CMPL-Wert von Null zugeordnet.

Eine bevorzugte Ausgestaltung dieses erfindungsgemäßen Verfahrens sieht nun folgende Verfahrensschritte für die Auswahl der abzuschaltenden Windenergieanlage bzw. Windenergieanlagen vor:

(0) Wenn $SP_P < \sum_j CMPL_j, j \in N_{on}$: Ausführen der nachfolgenden Verfahrensschritte; SOLANGE: $SP_P < \sum_j CMPL_j j \in N_{on}$:

(1) Bestimmen der Menge $N_{on}^*$ der zugeschalteten Windenergieanlagen bzw. Windenergieanlagen mit Produktionserlaubnis, für die eine Abschaltung momentan möglich ist;

(2) Vergleichen der minimalen Wirkleistungslimits $CMPL_j$ der Windenergieanlagen, deren Abschaltung momentan möglich ist, und Bestimmen der Windenergieanlage(n), deren CMPL* am größten ist

$$ CMPL^* := \max_j CMPL_j, j \in N_{on}^* ; $$

(3) wenn genau eine Windenergieanlage k ein größtes minimales Wirkleistungslimit ($CMPL_k = CMPL^*$) besitzt, dann Auswählen der Windenergieanlage k und Springen zu Schritt (7), sonst Fortfahren mit Schritt (4);

(4) Vergleichen der Ausschalt-Zählerstände der Windenergieanlagen, deren CMPL-Wert am größten ist;

(5) wenn genau eine Windenergieanlage k ein größtes minimales Wirkleistungslimit und einen minimalen Ausschalt-Zählerstand besitzt, dann Auswählen der Windenergieanlage k und Springen zu Schritt (7), sonst Fortfahren mit Schritt (6);

(6) Anwenden einer vorgegebenen Abbruchbedingung und Auswählen der Windenergieanlage k, welche der eineindeutigen Abbruchbedingung genügt;

(7) Abschalten der ausgewählten Windenergieanlage k.

Das vorbezeichnete Verfahren mit seinen einzelnen Schritten ist ein Ausführungsbeispiel für das erfindungsgemäße Verfahren, wobei hier ergänzend ein Ausschalt-Zähler der Windenergieanlagen ausgewertet wird, um eine nicht eindeutige Bedingung hinsichtlich des Maximums von CMPL auflösen zu können. Weiterhin wird eine eineindeutige Abbruchbedingung geprüft, um im Falle einer nicht eindeutigen Prüfung der Abschaltzählerstände, beispielsweise auf Basis der größten IP-Adresse (die im Windpark statisch vorgegeben wird) oder der kleinsten Nummerierung, jeweils eine einzelne Windenergieanlage eindeutig für die Abschaltung auswählen zu können. Im Schritt (4) kann alternativ auch ein Vergleich der Betriebsstundenzählerstände erfolgen. Es wird dann die bzw. es werden dann die Windenergieanlagen identifiziert, deren Betriebsstundenzählerstand maximal ist.

Alternativ kann im Schritt (4) ein Vergleich lastnormierter Betriebsstundenzählerstände erfolgen.

Der Schritt (2) des Vergleichens der minimalen Wirkleistungslimits $CMPL_j$ der Windenergieanlagen, deren Abschaltung momentan möglich ist, und Bestimmen der Windenergieanlage(n), deren CMPL am größten ist, kann einen Zwischenschritt (2') umfassen, bei dem ein Binning erfolgt. Bei diesem Zwischenschritt werden beispielsweise die einzelnen $CMPL_j$ vor dem Vergleichen gerundet und jeder Windenergieanlage der Menge {N} ein gerundeter Wert $CMPL_j'$ zugeordnet. Anschließend werden die $CMPL_j'$ der Windenergieanlagen verglichen und die Windenergieanlage(n) bestimmt, deren gerundeter CMPL'* am größten ist. Beim Runden kann auf- oder abgerundet werden. Durch die Vorgabe, an welcher Stelle gerundet werden soll, kann ausgewählt werden, wie stark sich dem Schritt (2) nachgelagerte Auswahlregeln auf die Bestimmung der abzuschaltenden Windenergieanlage auf die Auswahl auswirken. Durch das Runden entstehen Intervalle, auf die sich die einzelnen CMPL-Werte verteilen, es erfolgt somit eine Form des Binnings für die Werte. Sind die $CMPL_j$ beispielsweise in Kilowatt (kW) angegeben, kann bereits ein Runden an der 2. Vorkommastelle dazu führen, dass deutlich mehr Windenergieanlagen in den nachfolgenden Schritten (3) bis (6) zu berücksichtigen sind, als wenn ein Runden an der ersten Vorkommastelle oder gar nicht erfolgt. Beim Aufrunden an der 2. Vorkommastelle würden aus einer Menge von beispielsweise fünf Windenergieanlagen mit $CMPL_j$ von 450 kW, 480 kW, 510 kW, 530 kW und 535 kW drei Windenergieanlagen mit einem $CMPL_j'$ von 600 kW als bevorzugt abzuschalten ausgewählt werden, während ohne ein Binning die Windenergieanlage k mit einem $CMPL_k$ von 535 kW bereits eindeutig bestimmt wäre und weitere Auswahlkriterien keine Relevanz hätten. Neben einem Rundungsverfahren wäre auch denkbar, Intervalle vorzugeben und zu prüfen, ob der $CMPL_j$-Wert einer Windenergieanlage in einem der entsprechenden Bereiche liegt.

Beispielsweise kann der erste Wertebereich für CMPL-Werte von 0 bis 200 kW, ein zweiter von > 200 kW bis 500 kW, ein dritter Wertebereich > 500 kW bis 1000 kW, et cetera, vorgegeben sein. Auch andere Unterteilungen sind denkbar. In dem auf das Binning folgenden Auswahlschritt werden dann die Windenergieanlagen berücksichtigt, die einen $CMPL_j$-Wert in dem höchsten Wertebereich haben. Grundsätzlich ist ein Binning auch für die Auswertung von Zählerständen denkbar.

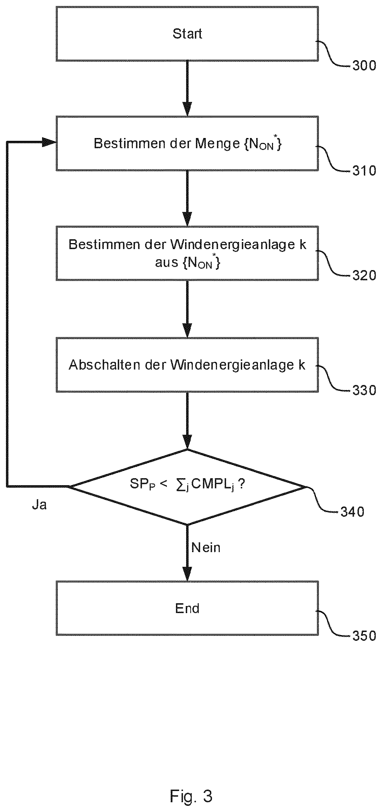

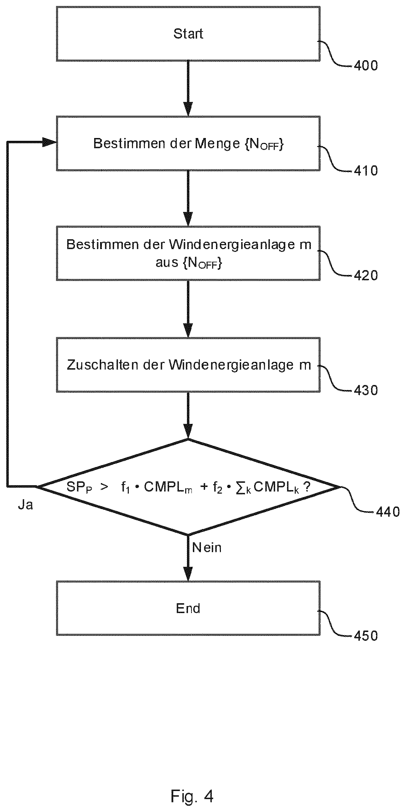

Das erfindungsgemäße Verfahren wird mit Blick auf die Figuren 3 und 4 erklärt. Fig. 3 zeigt in Schritt 300 den Startvorgang für das Verfahren zum Betreiben des Windparks. In dem Startvorgang 300 wird überprüft, ob $SP_P < \sum_j CMPL_j$ ist. Wenn die Bedingung erfüllt ist, ist die Abschaltung wenigstens einer Windenergieanlage notwendig und es wird mit Schritt 310 fortgefahren. Schritt 300 entspricht dem obigen Schritt (0), in welchem die Startbedingung überprüft wird. In Schritt 310 wird die Menge der zugeschalteten Windenergieanlagen bzw. Windenergieanlagen mit Produktionserlaubnis $\{N_{on}^*\}$ bestimmt, deren aktueller Betriebszustand ein Abschalten der Windenergieanlage erlaubt. Schritt 310 entspricht dem obigen Schritt (1). Aus der Menge $\{N_{on}^*\}$ der abschaltbaren Anlagen wird in Schritt 320 diejenige Windenergieanlage bestimmt, die im Vergleich zu den übrigen Windenergieanlagen bevorzugt abzuschalten ist. Schritt 320 umfasst in der verknappten Darstellung der Fig. 3 die Schritte (2) bis (6) aus den vorangegangenen Absätzen der Beschreibung. Es wird also die Windenergieanlage k aus der Menge $\{N_{on}^*\}$ bestimmt, so dass für jeden Wert von j aus der Menge $\{N_{on}^*\}$ ungleich k die Windenergieanlage k gegenüber der Windenergieanlage j bevorzugt abzuschalten ist. Durch die Schritte (3) bis (6) wird sichergestellt, dass die Auswahl eindeutig ist und die Windenergieanlage k existiert und die abzuprüfenden Bedingungen erfüllt.

In Schritt 330 wird dann die Windenergieanlage k abgeschaltet. Schritt 330 entspricht dem Schritt (7) aus den vorangegangenen Absätzen der Beschreibung. In Verfahrensschritt 340 wird anschließend als Abbruchbedingung mittels der SOLANGE-Bedingung überprüft, ob der für den Windpark vorgegebene Sollwert $SP_P$ größer als oder gleich zu der Summe der CMPL-Werte der im Windpark im Produktionsbetrieb verbliebenen Windenergieanlagen ist. Ist dies der Fall, so wird das Verfahren in Schritt 350 beendet. Ist dies nicht der Fall, kehrt das Verfahren zu Schritt 310 zurück und es wird erneut eine Menge $\{N_{on}^*\}$ der Windenergieanlagen bestimmt, die im Windpark abschaltbar sind.

$\{N_{ON}\}$ kann dabei eine echte Teilmenge der Menge an Anlagen aus dem vorhergehenden Durchlauf sein, es können aber auch Windenergieanlagen hinzukommen, beispielsweise wenn zwischenzeitlich eine weitere Windenergieanlage abschaltbar geworden ist. Schritte 340 und 350 entsprechen der SOLANGE-Bedingung der obigen Beschreibung. Nachdem das Verfahren im Schritt 350 beendet wurde, kann es erneut ausgeführt werden, sobald erneut die Notwendigkeit für die Abschaltung von Windenergieanlagen besteht, beispielsweise, wenn ein neuer Sollwert an den Windpark übermittelt wurde. Das Verfahren kann jedoch auch zyklisch ausgeführt werden, beispielsweise alle 1 bis 10 Sekunden.

Eine weitere bevorzugte Ausgestaltung des erfindungsgemäßen Verfahrens sieht folgende Verfahrensschritte für die Auswahl der zuzuschaltenden Windenergieanlage bzw. Windenergieanlagen vor:

(0*) Wenn $SP_P > f_2 \sum_k CMPL_k$ mit $f_2 > 1$: Ausführen der nachfolgenden Verfahrensschritte;

SOLANGE $SP_P > f_1 CMPL_m + f_2 \sum_{k, k \neq m} CMPL_k$ mit $f_1, f_2 > 1, m \in N_{off}, m \neq k$:

  (1*) Bestimmen der Menge der zuschaltbaren Windenergieanlagen $N_{off}$;
  (2*) Vergleichen der minimalen Wirkleistungslimits $CMPL_j$ der Windenergieanlagen, deren Zuschaltung momentan möglich ist, und Bestimmen der Windenergieanlage(n), deren CMPL-Wert am kleinsten ist

$$CMPL^* := \min_{j \in N_{off}} CMPL_j \; ;$$

(3*) wenn genau eine Windenergieanlage m ein kleinstes minimales Wirkleistungslimit ($CMPL_m = CMPL^*$) besitzt, dann Auswählen der Windenergieanlage m und Springen zu Schritt (7*), sonst Fortfahren mit Schritt (4*);

(4*) Vergleichen der Betriebsstundenzählerstände der Windenergieanlagen, deren CMPL*-Wert am kleinsten ist und deren Betriebstundenzähler minimal ist;

(5*) wenn genau eine Windenergieanlage m ein kleinstes minimales Wirkleistungslimit und einen minimalen Wert für ihren Betriebsstundenzähler besitzt, dann Auswählen der Windenergieanlage m und Springen zu Schritt (7*), sonst Fortfahren mit Schritt (6*);

(6*) Anwenden eines vorgegebenen Abbruchbedingung und Auswählen der Windenergieanlage m, welche der eineindeutigen Abbruchbedingung genügt;

(7*) Zuschalten der ausgewählten Windenergieanlage m.

Das entsprechende Verfahren für die Zuschaltung von Windenergieanlagen wird mit Bezug auf Fig. 4 erläutert. Das Verfahren beginnt mit dem Start 400. In Start 400 wird überprüft, ob $SP_P > f_2 \, \Sigma_k \, CMPL_k$ mit $f_2 > 1$ ist, also der dem Windpark vorgegebene Sollwert größer ist als die Summe der CMPL-Werte der im Betrieb befindlichen Windenergieanlagen multipliziert mit einem Gewichtungsfaktor. Wenn die Bedingung erfüllt ist, ist die Zuschaltung wenigstens einer Windenergieanlage möglich und es ist vorteilhaft, um den Regelbereich des Windparks zu verbessern mit Schritt 410 fortzufahren. Start 400 entspricht dem obigen Schritt (0*), in welchem die Startbedingung überprüft wird. Im nachfolgenden Verfahrensschritt 410 wird die Menge {$N_{off}$} der ausgeschalteten Windenergieanlagen bestimmt, deren aktueller Betriebszustand ein Zuschalten der Windenergieanlage erlaubt. Der Verfahrensschritt 410 entspricht dem obigen Schritt (1*). In einem nachfolgenden Auswahlschritt 420 wird die Windenergieanlage m bestimmt, die im Vergleich zu den übrigen Windenergieanlagen bevorzugt zuzuschalten ist. Der Verfahrensschritt 420 entspricht in der vereinfachten Darstellung der Fig. 4 den obigen Schritten (2*) bis (6*). Die Schritte (2*) bis (6*) können Zwischenschritte umfassen, in welchen ein geeignetes Binning erfolgt. In einem darauffolgenden Verfahrensschritt 430 wird die Windenergieanlage m zugeschaltet. Dieser Verfahrensschritt 430 entspricht dem obigen Schritt (7*).

Im Schritt 440 wird überprüft, ob die Bedingung $SP_P > f_1 \cdot CMPL_m + f_2 \cdot \Sigma_k \, CMPL_k$ erfüllt ist. Dieser Verfahrensschritt 440 entspricht der obigen SOLANGE-Bedingung. Für die Schritte (0*, 400) und die SOLANGE-Bedingung (440) sind in dem Windparkregler Gewichtungsfaktoren $f_1$ und $f_2$ vorgegeben.

Mit der SOLANGE-Bedingung wird geprüft, ob die gewichtete Summe der minimalen Leistungslimits der im Produktionsbetrieb befindlichen Windenergieanlagen $\Sigma_k \, CMPL_k$ und das minimale Leistungslimit $CMPL_m$ der neu zugeschalteten Windenergieanlage m kleiner ist als der dem Windpark vorgegebene Leistungssollwert $SP_P$. Entgegen der intuitiven Annahme, dass der Leistungssollwert durch die verfügbaren Leistungswerte $PA_j$ der im Betrieb befindlichen Anlagen erreicht werden sollte, wird mit dieser Bedingung gefordert, dass der Sollwert unter der Annahme erreicht werden soll, dass die im Betrieb befindlichen Windenergieanlagen lediglich ihre minimale Leistung einspeisen. Mit Vorteil werden so möglichst viele Windenergieanlagen in den Produktionsbetrieb versetzt. Erfolgt eine Änderung der Leistungssollwertvorgabe für den Windpark und es wird deutlich mehr Leistung von dem Windpark nachgefragt, so können die im Produktionsbetrieb befindlichen Windenergieanlagen ihre Leistungsabgabe schneller in Richtung der verfügbaren Leistung ändern, um der erhöhten Nachfrage nachzukommen. Windenergieanlagen, die nicht im Produktionsbetrieb sind, müssen hingegen erst gestartet werden, was abhängig von den vorliegenden Windbedingungen und der Auslegung der Windenergieanlagen eine deutliche Verzögerung bei der Bereitstellung zusätzlicher Leistung bewirken würde. Die Faktoren $f_1$ und $f_2$ dienen als Sicherheitsfaktoren und sind größer 1 vorgegeben. So wird sichergestellt, dass eine ausreichende Reserve zwischen dem Leistungssollwert $SP_P$ und der Summe der minimalen Leistungen der im Produktionsbetrieb befindlichen Windenergieanlagen entsteht. Auf diese Weise wird vermieden, dass es nach einer Zuschaltung einer Windenergieanlage im Falle einer starken Limitierung des Windparks, also wenn die Windenergieanlagen des Windparks in der Nähe ihrer minimalen Leistungslimits betrieben werden, direkt wieder zu einer Abschaltung einer Windenergieanlage kommt, obwohl sich an den Einflussfaktoren (dem externen Sollwert, den Windbedingungen, den Betriebsbedingungen der Windenergieanlagen) nichts Wesentliches verändert hat. Durch eine geeignete Wahl der Faktoren kann also ein Hystereseverhalten des Windparks unterdrückt werden. Die Faktoren können beispielsweise auch mittels einer Look-Up-Tabelle abhängig von der vorliegenden Windgeschwindigkeit, zum Beispiel von einem 10-Minuten-Mittelwert der Windgeschwindigkeit vorgegeben sein. Auch kann die Schwankungsbreite, also die Differenz zwischen maximaler und minimaler Windgeschwindigkeit über einen vorgegebenen Zeitraum berücksichtigt werden, um die Faktoren vorzugeben. Auch kann die Limitierung des Windparks gegenüber seiner Nennleistung oder seiner verfügbaren Leistung berücksichtigt werden. Die Windgeschwindigkeitsmesswerte können von einer repräsentativen Windenergieanlage des Windparks an den Windparkregler übermittelt werden. Alternativ kann auch eine Messung an einem dem Windpark zugeordneten Messmast erfolgen. Denkbar ist auch eine Mittelwertbildung unter Einbeziehung mehrerer Windgeschwindigkeitswerte mehrere Windenergieanlagen des Windparks. Auch ist denkbar, anstelle von Messwerten Schätzwerte zu verwenden. Entsprechende Schätzverfahren zur Ermittlung der Windgeschwindigkeit aus Betriebsgrößen von Windenergieanlagen sind aus dem Stand der Technik bekannt. Die Größe des Faktors $f_2$ kann weiterhin auch von der Anzahl der Windenergieanlagen in dem Windpark abhängen.

Befinden sich neben der Windenergieanlage m weitere Windenergieanlagen in der Startphase, z.B. weil sie in einem früheren Durchlauf des Verfahrens erst gestartet wurden, wird in Schritt 440 bzw. der SOLANGE-Bedingung anstatt $f_1 \cdot CMPL_m$ die gewichtete Summe aller in der Startphase befindlichen Windenergieanlagen berücksichtigt. Die Verwendung eines unabhängig von $f_2$ vorgebbaren Faktors $f_1$ erlaubt eine andere Gewichtung der minimalen Leistungen der Windenergieanlagen, die erst in den regulären Produktionsbetrieb zu überführen sind. Die Faktoren können jedoch zur Vereinfachung auch gleich gewählt werden. Zur Vereinfachung kann in Schritt 440 aber auch auf eine Unterscheidung zwischen den Anlagen, die sich im Produktionsbetrieb befinden, und solchen Anlagen, die gerade erst gestartet werden, verzichtet werden. Dafür kann die Bedingungen $SP_P > f_2 \cdot \Sigma_k CMPL_k$ überprüft werden, wobei die Summation über alle Anlagen, also jenen im Produktionsbetrieb und jenen, die sich in der Startphase befinden, erfolgt. Ist die Abbruchbedingung 440 erfüllt, so endet das Verfahren im Schritt 450. Ist die Abbruchbedingung noch nicht erfüllt, kehrt das Verfahren zu Schritt 410 zurück und bestimmt erneut eine Menge von Windenergieanlagen $\{N_{off}\}$. Nachdem das Verfahren im Schritt 450 beendet wurde, kann es erneut ausgeführt werden, sobald erneut die Notwendigkeit für die Zuschaltung von Windenergieanlagen besteht, beispielsweise, wenn ein neuer Sollwert an den Windpark übermittelt wurde. Das Verfahren kann jedoch auch zyklisch ausgeführt werden, beispielsweise alle 1 bis 10 Sekunden.

Der Windparkregler aus den vorangegangenen Ausführungsbeispielen erhält von den Windenergieanlagen Statusmitteilungen, die anzeigen, ob eine Windenergieanlage aktuell zu- oder abschaltbar ist. Windenergieanlagen können aus verschiedenen Gründen aktuell nicht zu- oder abschaltbar sein. Beispielsweise kann das Vorliegen eines schwerwiegenden Fehlers, der einen Defekt oder einen unsicheren Zustand der Windenergieanlage anzeigt, eine Zuschaltung verhindern. Zudem können die Windenergieanlagen dem Windparkregler mitteilen, dass eine Zuschaltung aktuell aufgrund der an der Windenergieanlage vorliegenden Umgebungsbedingungen nicht möglich ist. Beispielsweise kann an einer Windenergieanlage eine zu hohe oder zu niedrige Windgeschwindigkeit festgestellt werden oder es liegen Bedingungen vor, die auf eine (mögliche) Vereisung der Rotorblätter hinweisen. Auch kann ein Fehler in der Kommunikation zwischen Windparkregler und Windenergieanlage dazu führen, dass eine Zuschaltung nicht möglich ist. Weiterhin kann die Windenergieanlage durch einen Servicetechniker für Wartungs- oder Testzwecke aus dem Produktionsbetrieb genommen worden sein. Eine Abschaltung kann hingegen temporär nicht möglich sein bzw. unterbunden werden, wenn eine Windenergieanlage sich aktuell in der Startphase befindet, um in den regulären Produktionsbetrieb überzugehen. Auch eine gestörte Kommunikation kann eine Abschaltung verhindern. Abhängig von der Anzahl und dem Betriebszustand der einzelnen Windenergieanlagen des Windparks kann der Fall eintreten, dass zu einem bestimmten Zeitpunkt keine Windenergieanlage ab- oder zuschaltbar ist. Beispielweise kann sich der Windpark aktuell in einer Startphase befinden, in der die Anlagen in den regulären Betrieb überführt werden. In diesem Fall kann das Auswahlverfahren abgebrochen und/oder verzögert und zu einem späteren Zeitpunkt erneut ausgeführt werden.

In einer Weiterbildung der erfinderischen Lösung kann auch die verfügbare Leistung $PA_j$ der Windenergieanlagen bei der Auswahl der ab- bzw. zuzuschaltenden Windenergieanlage berücksichtigt werden. Beispielsweise kann diese Berücksichtigung in den Schritten 320 bzw. 420, speziell in den Schritten (4) bzw. (4*) erfolgen. Bevorzugt kann bei der Auswahl der bevorzugt abzuschaltenden Windenergieanlage(n) die Differenz $PA_j - CMPL_j$ zwischen der verfügbare Leistung und der minimalen Leistung berücksichtigt werden und die Windenergieanlage(n) ausgewählt werden, deren Differenz möglichst klein ist. Durch dieses Auswahlkriterium wird der Leistungsbereich, innerhalb dessen der Windpark regelbar ist, maximiert. Bevorzugt kann bei der Auswahl der bevorzugt zuzuschaltenden Windenergieanlage(n) die Differenz $PA_j - CMPL_j$ zwischen der verfügbare Leistung und der minimalen Leistung berücksichtigt werden und die Windenergieanlage(n) ausgewählt werden, deren Differenz möglichst groß ist. Auch durch dieses Auswahlkriterium wird der Leistungsbereich, innerhalb dessen der Windpark regelbar ist, maximiert. Alternativ dazu ließe sich die Differenz zwischen der verfügbaren Leistung und der minimalen Leistung der Windenergieanlagen auch bereits in den Schritten 310 bzw. 410, also den Schritten (2) bzw. (2*) berücksichtigen.

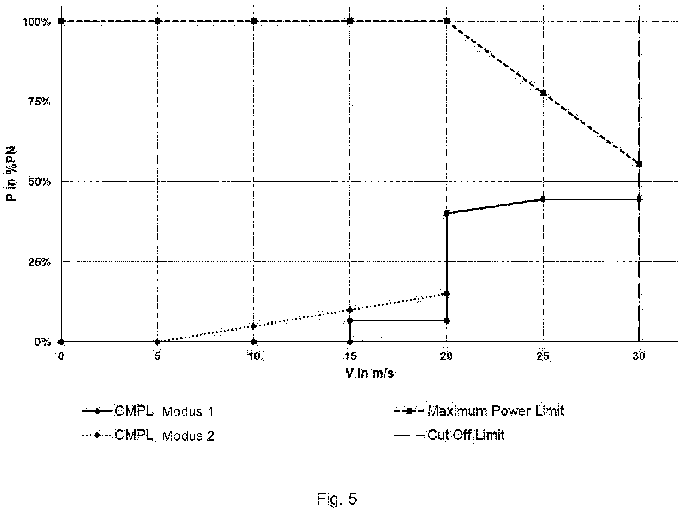

Besondere Vorteile des erfindungsgemäßen Verfahrens treten zutage, wenn den Windenergieanlagen, abhängig von ihrem Betriebsmodus und der Windgeschwindigkeit, ein CMPL-Wert zugewiesen wird. Fig. 5 zeigt ein entsprechend ausgeführtes Beispiel. Die beiden Betriebsmodi in Fig. 5 unterscheiden sich darin, dass für einen ausgewählten Bereich der Windgeschwindigkeit unterschiedlich hohe CMPL-Werte in Abhängigkeit von der Windgeschwindigkeit vorgegeben werden. Für eine Windenergieanlage, die in Modus 2 arbeitet, ist für eine Windgeschwindigkeit von 5 m/s bis 20 m/s ein zunehmender CMPL-Wert dargestellt, der größer ist als der CMPL-Wert bzw. dessen Verlauf, der für den Modus 1 vorgegeben ist. Ab 20 m/s verlaufen die CMPL-Kennlinien für beide Modi gleich. Die Kennlinien enden bei einer Cut-Off-Windgeschwindigkeit von 30 m/s. Der vergleichsweise hohe Wert von 30 m/s für die Cut-Off-Windgeschwindigkeit wird in dem vorliegenden Beispiel erreicht durch eine Leistungsreduzierung für Windgeschwindigkeiten oberhalb von 20 m/s. Entsprechende Verfahren für ein solches "Soft-Cut-Out" sind im Stand der Technik bekannt. Während der CMPL-Wert im Bereich oberhalb von 20 m/s sich nur unwesentlich erhöht, wird die von der Windenergieanlage bereitgestellte Wirkleistung mit zunehmender Windgeschwindigkeit von einem Maximum von 100 % der Nennleistung auf einen Wert knapp 50 % abgesenkt. Je nach Auslegung der Windenergieanlagen und Betriebsmodi sind auch gänzlich andere Verläufe als die hier dargestellten möglich. Die in der Fig. 5 dargestellten Verläufe können abhängig von der Windrichtung vorgegeben sein. Beispielsweise können die dargestellten Verläufe für einen bestimmten Azimutwinkelbereich der Windenergieanlage vorgegeben sein. Ist die Windenergieanlage während ihres Betriebs mit ihrem Rotor in diesen Winkelbereich ausgerichtet, gelten die entsprechenden Verläufe bzw. die ihnen zugrundeliegenden Look-Up-Tabellen. Für andere Winkelbereiche können dann weitere Kennfelder in der Regelung der Windenergieanlage hinterlegt sein. Der Azimutwinkel, entsprechend dem die Windenergieanlage ausgerichtet ist, liegt an der Regelungsvorrichtung der Windenergieanlage an.

Bezugszeichenliste

| 100 | Windenergieanlage |
| 110 | Turm |
| 120 | Gondel |
| 130 | Rotor |
| 140 | Rotornabe |
| 150 | Rotorblatt |
| 160 | Sensorarray |
| 200 | Windpark |
| 201, 202, 203 | Windenergieanlage |
| 210 | zentraler Windparkregler |
| 211 | externe Regelungseinrichtung (Netzbetreiber) |
| 220 | Übergabestation |
| 221 | Sensoreinheit |
| 230 | elektrisches Übertragungsnetz |
| 121 | Antriebstrang |
| 122 | Getriebe |
| 123 | Generator |
| 124 | Umrichter |
| 125 | rotorseitiger Umrichter |
| 126 | netzseitiger Umrichter |
| 127 | Umrichterregler |
| 128 | Mittelspannungstransformator |
| 129 | Windenergieanlagenregler |
| 151 | Rotorblattwinkelstellvorrichtung |
| 161 | Drehzahlsensor |
| n | Anzahl der Windenergieanlage des Windparks mit Produktionsfreigabe |
| {N} | Menge der abschaltbaren bzw. Menge der zuschaltbaren Windenergieanlagen |
| $N_{off}$ | Menge der nicht zugeschalteten, aber zuschaltbaren Windenergieanlagen |
| $N_{on}$ | Menge der zugeschalteten Windenergieanlagen |
| $N_{on}{}^*$ | Menge der abschaltbaren Windenergieanlagen |
| k, m | abzuschaltende bzw. zuzuschaltende Windenergieanlage |
| $SP_j$ | Wirkleistungssollwert der Windenergieanlage j |
| $PA_j$ | aktuell verfügbare Wirkleistung der Windenergieanlage j |
| $CMPL_j$ | aktuelles minimales Wirkleistungslimit der Windenergieanlage j |
| $PN_j$ | Nennleistung der Windenergieanlage j |
| $SP_p$ | Sollwert für die durch den Windpark am Netzverknüpfungspunkt einzuspeisende Wirkleistung |
| $f_1, f_2$ | Gewichtungsfaktoren |
| 300 - 350 | Verfahrensschritte |
| 400 - 450 | Verfahrensschritte |

**Patentansprüche**

1. Verfahren zum Betreiben eines Windparks (200) mit einer Vielzahl von Windenergieanlagen (100, 201, 202, 203), denen jeweils ein minimales Leistungslimit zugeordnet ist ($CMPL_j$), wobei dem Windpark (200) für eine einzuspeisende Leistung ein Leistungssollwert ($SP_P$) vorgegeben ist, abhängig von dem eine Zu- oder Abschaltung einzelner Windenergieanlagen (100, 201, 202, 203) erfolgt, wobei die Zu- oder Abschaltung von einer oder mehreren Windenergieanlagen (100, 201, 202, 203) in dem Windpark (200) abhängig von den jeweils zugeordneten minimalen Leistungslimits ($CMPL_j$) erfolgt, wobei jeder Windenergieanlage (100, 201, 202, 203) des Windparks (200) ein aktueller Wert für ihr minimales Leistungslimit ($CMPL_j$) zugeordnet wird, wobei der Wert variabel vorgegeben wird, unter Berücksichtigung der Betriebs- und/oder Umgebungsbedingungen der jeweiligen Windenergieanlage, wobei aus einer Menge von zugeschalteten Windenergieanlagen des Windparks (200) ($N_{on}$) diejenige Windenergieanlage zuerst abgeschaltet wird, die im Vergleich zu den übrigen Windenergieanlagen einen großen Wert für ihr minimales Leistungslimit ($CMPL_j$) besitzt oder aus einer Menge von zuschaltbaren Windenergieanlagen des Windparks (200) ($N_{off}$) diejenige Windenergieanlage zuerst zugeschaltet wird, die im Vergleich zu den übrigen Windenergieanlagen einen kleinen Wert für ihr minimales Leistungslimit (CMPL$_j$) besitzt.

2. Verfahren nach Anspruch 1, **dadurch gekennzeichnet, dass** das minimale Leistungslimit (CMPL$_j$) jeder Windenergieanlage des Windparks (200) den minimalen Wirkleistungswert der Windenergieanlage angibt und der dem Windpark (200) zugeordnete Leistungssollwert (SP$_P$) ein Wirkleistungssollwert ist.

3. Verfahren nach Anspruch 1 oder 2, **dadurch gekennzeichnet, dass**, wenn der Vergleich zu den übrigen Windenergieanlagen die zu- oder abzuschaltende Windenergieanlage nicht eindeutig festlegt, eine Festlegung nach mindestens einem der folgenden Kriterien erfolgt:

   a. Eine abzuschaltende Windenergieanlage von den Windenergieanlagen mit einem großen Wert für ihr minimales Leistungslimit wird nach dem Stand eines Ausschalt-Zählers ausgewählt, wobei eine Windenergieanlage mit einem kleinen Wert ihres Ausschalt-Zählers bevorzugt ausgewählt wird,
   b. Eine abzuschaltende Windenergieanlage von den Windenergieanlagen mit einem großen Wert für ihr minimales Leistungslimit wird nach dem Stand eines Betriebsstunden-Zählers ausgewählt, wobei eine Windenergieanlage mit einer großen Anzahl von Betriebsstunden bevorzugt ausgewählt wird,
   c. Eine zuzuschaltende Windenergieanlage von den Windenergieanlagen mit einem kleinen Wert für ihr minimales Leistungslimit wird nach ihrem Ausschalt-Zähler ausgewählt, wobei eine Windenergieanlage mit einem kleinen Wert ihres Ausschalt-Zählers bevorzugt ausgewählt wird, und
   d. Eine zuzuschaltende Windenergieanlage von den Windenergieanlagen mit einem kleinen Wert für ihr minimales Leistungslimit wird nach ihrem Betriebsstunden-Zähler ausgewählt, wobei eine Windenergieanlage mit einer geringen Anzahl von Betriebsstunden bevorzugt ausgewählt wird.

4. Verfahren nach Anspruch 3, **dadurch gekennzeichnet, dass** für die Festlegung der größten oder der kleinsten Werte im Vergleich mit den anderen Windenergieanlagen vorbestimmte Leistungs-Intervalle definiert sind, innerhalb derer die Werte für die minimalen Leistungslimits nicht unterschieden werden.

5. Verfahren nach einem der Ansprüche 1 bis 4, **dadurch gekennzeichnet, dass** den Windenergieanlagen je nach ihrem Betriebsmodus das minimale Leistungslimit zugewiesen wird.

6. Verfahren nach einem der Ansprüche 1 bis 5, **dadurch gekennzeichnet, dass** mindestens eine der im Produktionsbetrieb befindlichen Windenergieanlagen abgeschaltet wird, wenn der dem Windpark (200) vorgegebene Leistungssollwert (SP$_P$) kleiner als die Summe der minimalen Leistungslimits aller im Produktionsbetrieb befindlichen Windenergieanlagen ($\Sigma_{j \in N_{on}} CMPL_j$) ist.

7. Verfahren nach einem der Ansprüche 1 bis 6, **dadurch gekennzeichnet, dass** mindestens eine der Windenergieanlagen zugeschaltet wird, wenn der dem Windpark (200) vorgegebene Leistungssollwert (SP$_P$) größer ist als eine gewichtete Summe der minimalen Leistungslimits aller im Produktionsbetrieb befindlichen Windenergieanlagen ($f_2 \Sigma_{k \in N_{on}} CMPL_k$).

8. Verfahren nach Anspruch 7, **dadurch gekennzeichnet, dass** die gewichtete Summe größer als eine nicht gewichtete Addition der minimalen Leistungslimits aller im Produktionsbetrieb befindlichen Windenergieanlagen ist ($f_2 > 1$).

9. Verfahren nach Anspruch 8, **dadurch gekennzeichnet, dass** die Gewichtung ($f_2 > 1$) für die gewichtete Summe abhängig von der Windgeschwindigkeit vorgegeben ist.

10. Windpark mit einer Vielzahl von Windenergieanlagen (100, 201, 202, 203), denen jeweils ein minimales Leistungslimit vorgegeben ist (CMPL$_j$), wobei eine zentrale Steuereinheit (210) für den Windpark (200) vorgesehen ist, die dazu eingerichtet ist, ein Verfahren nach einem der Ansprüche 1-9 auszuführen und der ein Leistungssollwert (SP$_P$) von einzuspeisender Leistung vorgegeben ist und wobei die Steuereinheit (210) eingerichtet ist, die Windenergieanlagen (100, 201, 202, 203) abhängig von dem Leistungssollwert (SP$_P$) und abhängig von den minimalen Leistungslimits der Windenergieanlagen (CMPL$_j$) zu- oder abzuschalten, wobei jeder Windenergieanlage des Windparks ein aktueller Wert für ihr minimales Leistungslimit zugeordnet ist, wobei der Wert variabel vorgebbar ist, unter Berücksichtigung der Betriebs- und/oder Umgebungsbedingungen der jeweiligen Windenergieanlage wobei die Steuereinheit (210) dafür ausgebildet ist, aus einer Menge von zugeschalteten Windenergieanlagen (N$_{on}$) diejenige Windenergieanlage zuerst abzuschalten, die im Vergleich zu den übrigen Windenergieanlagen einen großen Wert für ihr minimales Leistungslimit (CMPL$_k$) besitzt, oder aus der Menge von zuschaltbaren Windenergieanlagen (N$_{off}$) diejenige Windenergieanlage zuerst zuzuschalten, die im Vergleich zu den übrigen Windenergieanlagen einen kleinen Wert für ihr minimales Leistungslimit (CMPL$_m$) besitzt.

11. Windpark nach Anspruch 10, **dadurch gekennzeichnet, dass** jede der Windenergieanlagen (100, 201, 202, 203) eingerichtet ist, ihr aktuelles minimales Leistungslimit (CMPL$_j$) an die Steuereinheit (210) zu melden.

**Claims**

1. Method for operating a wind farm (200) having a plurality of wind turbines (100, 201, 202, 203), to each of which a minimum power limit is assigned (CMPL$_j$), wherein a power set point (SP$_p$) for a power to be fed in is set for the wind farm (200), depending on which a connection or disconnection of individual wind turbines (100, 201, 202, 203) takes place, wherein the connection or disconnection of one or more wind turbines (100, 201, 202, 203) in the wind farm (200) takes place depending on the respectively assigned minimum power limits (CMPL$_j$), wherein each wind turbine (100, 201, 202, 203) of the wind farm (200) is assigned a current value for its minimum power limit (CMPL$_j$), wherein the value is variably set taking into account the operating and/or ambient conditions of the respective wind turbine, wherein from a set of connected wind turbines of the wind farm (200) (N$_{on}$), that wind turbine is disconnected first that has a large value for its minimum power limit (CMPL$_j$) compared to the other wind turbines, or from a set of connectable wind turbines of the wind farm (200) (N$_{off}$), that wind turbine is connected first that has a small value for its minimum power limit (CMPL$_j$) compared to the other wind turbines.

2. Method according to claim 1, **characterized in that** the minimum power limit (CMPL$_j$) of each wind turbine of the wind farm (200) indicates the minimum active power value of the wind turbine and the power set point (SP) assigned to the wind farm (200) is an active power set point.

3. Method according to claim 1 or 2, **characterized in that**, if the comparison with the other wind turbines does not clearly determine the wind turbine to be connected or disconnected, a determination is made according to at least one of the following criteria:

    a. A wind turbine to be disconnected from the wind turbines with a large value for its minimum power limit is selected according to the state of a shutdown counter, wherein a wind turbine with a small value of its shutdown counter is preferably selected,
    b. A wind turbine to be disconnected from the wind turbines with a large value for its minimum power limit is selected according to the state of an operating hours counter, wherein a wind turbine with a large number of operating hours is preferably selected,
    c. A wind turbine to be connected from the wind turbines with a small value for its minimum power limit is selected according to its shutdown counter, wherein a wind turbine with a small value of its shutdown counter is preferably selected, and
    d. A wind turbine to be connected from the wind turbines with a small value for its minimum power limit is selected according to its operating hours counter, wherein a wind turbine with a small number of operating hours is preferably selected.

4. Method according to claim 3, **characterized in that** set power intervals are defined for determining the largest or the smallest values in comparison with the other wind turbines, within which the values for the minimum power limits are not differentiated.

5. The method according to any one of claims 1 to 4, **characterized in that** the wind turbines are assigned the minimum power limit depending on their operating mode.

6. Method according to one of claims 1 to 5, **characterized in that** at least one of the wind turbines in production mode is disconnected if the power set point (SP$_p$) specified for the wind farm (200) is less than the sum of the minimum power limits of all the wind turbines ($\Sigma_{j\in N_{on}}CMPL_j$) in production mode.

7. Method according to one of claims 1 to 6, **characterized in that** at least one of the wind turbines is connected if the power set point (SP$_p$) specified for the wind farm (200) is greater than a weighted sum of the minimum power limits of all the wind turbines ($f_2 \Sigma_{k\in N_{on}}CMPL_k$) in production mode.

8. Method according to claim 7, **characterized in that** the weighted sum is greater than an unweighted addition of the minimum power limits of all wind turbines in production mode ($f_2 > 1$).

9. Method according to claim 8, **characterized in that** the weighting ($f_2 > 1$) for the weighted sum is set as a function of the wind speed.

10. Wind farm with a plurality of wind turbines (100, 201, 202, 203), to each of which a minimum power limit is assigned (CMPL$_j$), wherein a central control unit (210) is provided for the wind farm (200), said control unit (210) being configured to perform a method according to any one of the claims 1-9, wherein a

power set point (SP$_p$) of power to be fed in is set for said control unit (210) and wherein the control unit (210) is configured to connect or disconnect the wind turbines (100, 201, 202, 203) depending on the power set point (SP$_p$) and depending on the minimum power limits of the wind turbines (CMPL$_j$), wherein each wind turbine of the wind farm is assigned a current value for its minimum power limit, wherein said value can be variably set taking into account the operating and/or ambient conditions of the respective wind turbine, wherein the control unit (210) is configured to disconnect first, from a set of connected wind turbines (N$_{on}$), that wind turbine that has a large value for its minimum power limit (CMPL$_k$) in comparison with the other wind turbines, or, from the set of connectable wind turbines (N$_{off}$), to first connect that wind turbine that has a small value for its minimum power limit (CMPL$_m$) in comparison with the other wind turbines.

11. Wind farm according to claim 10, **characterized in that** each of the wind turbines (100, 201, 202, 203) is configured to report its current minimum power limit (CMPL$_j$) to the control unit (210).

**Revendications**

1. Procédé de fonctionnement d'un parc éolien (200) comprenant une pluralité d'éoliennes (100, 201, 202, 203) auxquelles est attribuée respectivement une limite de puissance minimale (CMPL$_j$), dans lequel une valeur de consigne de puissance (SP$_P$) d'une puissance à alimenter est prédéfinie pour le parc éolien (200), en fonction de laquelle un couplage ou un découplage de certaines éoliennes (100, 201, 202, 203) est effectué, dans lequel le couplage ou le découplage d'une ou de plusieurs éoliennes (100, 201, 202, 203) dans le parc éolien (200) est effectué en fonction des limites de puissance minimales (CMPL$_j$) respectivement attribuées, dans lequel une valeur actuelle est attribuée à chaque éolienne (100, 201, 202, 203) du parc éolien (200) pour sa limite de puissance minimale (CMPL$_j$), dans lequel la valeur est prédéfinie de façon variable, en tenant compte des conditions de fonctionnement et/ou ambiantes de chaque éolienne, dans lequel l'éolienne dont la valeur de limite de puissance minimale (CMPL$_j$) est élevée en comparaison avec celle des autres éoliennes est découplée en premier parmi un ensemble d'éoliennes couplées du parc éolien (200) (N$_{on}$) ou l'éolienne dont la valeur de limite de puissance minimale (CMPL$_j$) est basse en comparaison avec celle des autres éoliennes est couplée en premier parmi un ensemble d'éoliennes aptes à être couplées du parc éolien (200) (N$_{off}$).

2. Procédé selon la revendication 1, **caractérisé en ce que** la limite de puissance minimale (CMPL$_j$) de chaque éolienne du parc éolien (200) indique la valeur de puissance effective minimale de l'éolienne et la valeur de consigne de puissance (SP$_P$) attribuée au parc éolien (200) est une valeur de consigne de puissance effective.

3. Procédé selon la revendication 1 ou 2, **caractérisé en ce que** lorsque la comparaison avec les autres éoliennes ne permet de déterminer de façon évidente l'éolienne à coupler ou découpler, une détermination est effectuée selon l'un au moins des critères suivants :

   a. une éolienne à découpler parmi les éoliennes présentant une valeur élevée pour leur limite de puissance minimale est sélectionnée selon l'état d'un compteur de mise hors service, dans lequel une éolienne dont la valeur du compteur de mise hors service est faible est sélectionnée de préférence,
   b. une éolienne à découpler parmi les éoliennes présentant une valeur élevée pour leur limite de puissance minimale est sélectionnée selon l'état d'un compteur d'heures de service, dans lequel une éolienne présentant un grand nombre d'heures de service est sélectionnée de préférence,
   c. une éolienne à coupler parmi les éoliennes présentant une valeur faible pour leur limite de puissance minimale est sélectionnée selon son compteur de mise hors service, dans lequel une éolienne présentant une faible valeur de compteur de mise hors service est sélectionnée de préférence, et
   d. une éolienne à coupler parmi les éoliennes présentant une valeur faible pour leur limite de puissance minimale est sélectionnée selon son compteur d'heures de service, dans lequel une éolienne présentant un petit nombre d'heures de service est sélectionnée de préférence.

4. Procédé selon la revendication 3, **caractérisé en ce que** pour la détermination des valeurs les plus élevées ou les plus faibles en comparaison avec les autres éoliennes, des intervalles de puissance préétablis sont définis, dans lesquels les valeurs pour les limites de puissance minimales ne sont pas différenciées.

5. Procédé selon l'une des revendications 1 à 4, **caractérisé en ce que** la limite de puissance minimale est associée aux éoliennes en fonction de leur mode de fonctionnement.

6. Procédé selon l'une des revendications 1 à 5, **caractérisé en ce qu'**au moins une des éoliennes en service de production est découplée lorsque la valeur de consigne de puissance ($SP_P$) prédéfinie pour le parc éolien (200) est inférieure à la somme des limites de puissance minimales de toutes les éoliennes en service de production ($\Sigma_{j \in N_{on}} CMPL_j$).

7. Procédé selon l'une des revendications 1 à 6, **caractérisé en ce qu'**au moins une des éoliennes est couplée lorsque la valeur de consigne de puissance ($SP_P$) prédéfinie pour le parc éolien (200) est supérieure à une somme pondérée des limites de puissance minimales de toutes les éoliennes en service de production ($f_2 \Sigma_{k \in N_{on}} CMPL_k$).

8. Procédé selon la revendication 7, **caractérisé en ce que** la somme pondérée est supérieure à une addition non pondérée des limites de puissance minimales de toutes les éoliennes en service de production ($f_2 > 1$).

9. Procédé selon la revendication 8, **caractérisé en ce que** la pondération ($f_2 > 1$) pour la somme pondérée est prédéfinie en fonction de la vitesse du vent.

10. Parc éolien comprenant une pluralité d'éoliennes (100, 201, 202, 203) dont une limite de puissance minimale ($CMPL_j$) est prédéfinie respectivement, dans lequel il est prévu une unité de commande centrale (210) pour le parc éolien (200), laquelle est conçue pour la mise en œuvre d'un procédé selon l'une des revendications 1 à 9 et pour laquelle une valeur de consigne de puissance ($SP_P$) pour la puissance à alimenter est prédéfinie et dans lequel l'unité de commande (210) est conçue pour coupler ou découpler les éoliennes (100, 201, 202, 203) en fonction de la valeur de consigne de puissance ($SP_P$) et en fonction des limites de puissance minimales ($CMPL_j$) des éoliennes, dans lequel une valeur actuelle est attribuée à chaque éolienne du parc éolien pour sa limite de puissance minimale, dans lequel la valeur peut être prédéfinie de façon variable, en tenant compte des conditions de fonctionnement et/ou ambiantes de chaque éolienne, dans lequel l'unité de commande (210) est configurée pour découpler en premier l'éolienne dont la valeur de la limite de puissance minimale ($CMPL_k$) est élevée en comparaison avec celle des autres éoliennes, parmi un ensemble d'éoliennes couplées ($N_{on}$), ou pour coupler en premier l'éolienne dont la valeur de la limite de puissance minimale ($CMPL_m$) est faible en comparaison avec celle des autres éoliennes, parmi un ensemble d'éoliennes aptes à être couplées ($N_{off}$).

11. Parc éolien selon la revendication 10, **caractérisé en ce que** chacune des éoliennes (100, 201, 202, 203) est conçue pour indiquer sa limite de puissance minimale ($CMPL_j$) actuelle à l'unité de commande (210).

Fig. 1

Fig. 2

EP 3 848 575 B1

```
┌─────────────────────────────┐
│            Start            │──┐
└─────────────────────────────┘  └─300
               │
               ▼
┌─────────────────────────────┐
│  Bestimmen der Menge {N_ON*} │──┐
└─────────────────────────────┘  └─310
               │
               ▼
┌─────────────────────────────┐
│ Bestimmen der Windenergieanlage k │──┐
│          aus {N_ON*}        │  └─320
└─────────────────────────────┘
               │
               ▼
┌─────────────────────────────┐
│ Abschalten der Windenergieanlage k │──┐
└─────────────────────────────┘  └─330
               │
               ▼
           ◇ SP_P < Σ_j CMPL_j ? ◇──┐
      Ja                          └─340
               │ Nein
               ▼
┌─────────────────────────────┐
│            End              │──┐
└─────────────────────────────┘  └─350
```

Die Entscheidung lautet: $SP_P < \sum_j CMPL_j$ ?

Fig. 3

Start

400

Bestimmen der Menge {$N_{OFF}$}

410

Bestimmen der Windenergieanlage m
aus {$N_{OFF}$}

420

Zuschalten der Windenergieanlage m

430

$SP_P > f_1 \cdot CMPL_m + f_2 \cdot \sum_k CMPL_k$ ?

Ja

440

Nein

End

450

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010028954 A2
- EP 2896102 B1
- EP 2824322 A1
- EP 2757250 A1
- EP 2028368 B1
- EP 3754178 A1
- EP 3570401 A1